# EUROPEAN PATENT APPLICATION

(11) **EP 4 576 242 A2**
(43) Date of publication of application: **25.06.2025**
(21) Application number: 24199838.4
(22) Date of filing: 11.09.2024
(51) Int. Cl.: H01M 4/131, H01M 4/134, H01M 4/136, H01M 4/62, H01M 10/0562, H01M 4/40

(54) **ALL-SOLID SECONDARY BATTERY**

(30) Priority: 20.12.2023 KR 20230187569; 16.05.2024 KR 20240064133
(71) Applicant: SAMSUNG SDI CO., LTD., Yongin-si, Gyeonggi-do 17084 (KR)
(72) Inventor: Son, Inhyuk, 17084 Yongin-si, Gyeonggi-do (KR); Jo, Sungnim, 17084 Yongin-si, Gyeonggi-do (KR); Shim, Kyueun, 17084 Yongin-si, Gyeonggi-do (KR); Lim, Hyungsub, 17084 Yongin-si, Gyeonggi-do (KR); Park, Taehyun, 17084 Yongin-si, Gyeonggi-do (KR); Lee, Jieun, 17084 Yongin-si, Gyeonggi-do (KR)
(74) Representative: Michalski Hüttermann & Partner Patentanwälte mbB

(57) **Abstract**

An all-solid secondary battery includes a cathode layer, an anode layer, and a solid electrolyte layer between the cathode layer and the anode layer, wherein the cathode layer includes a cathode current collector and a cathode active material layer on a side of the cathode current collector, and the anode layer includes an anode current collector and a first anode active material layer on a side of the anode current collector, wherein the first anode active material layer includes a first anode active material and a second anode active material, each of which is capable of forming an alloy or a compound with lithium, and a fibrous carbon-based material, and a ratio (B/A) of an initial charge capacity (B) of the first anode active material layer to an initial charge capacity (A) of the cathode active material layer is in a range of about 0.01 to about 0.75.

## Description

### CROSS-REFERENCE TO RELATED APPLICATION

The present application claims priority to and the benefit of Korean Patent Application No. 10-2023-0187569, filed on December 20, 2023, in the Korean Intellectual Property Office, and Korean Patent Application No. 10-2024-0064133, filed on May 16, 2024, in the Korean Intellectual Property Office, the entire content of each of which is incorporated herein by reference.

### BACKGROUND

### 1. Field

One or more embodiments of the present disclosure relate to an all-solid secondary battery.

### 2. Description of the Related Art

Recently, with the rapid spread and popularization of electronic devices using batteries, such as mobile phones, laptop computers, and/or electric vehicles, the demand for batteries, e.g., secondary (rechargeable) batteries with relatively high energy density and high capacity have been rapidly increased. For instance, research and development for improving the performance of such secondary batteries, e.g., lithium secondary batteries, has been actively conducted or pursued. A lithium secondary battery is a battery including an electrolyte and a cathode and an anode, each of the cathode and the anode including an active material capable of intercalating and deintercalating lithium ions. A lithium secondary battery produces electrical energy through oxidation and reduction reactions if (e.g., when) lithium ions are intercalated/deintercalated into/from a cathode and an anode.

Recently, in accordance with industrial demand, batteries having relatively high energy density and high safety have been actively developed. For example, lithium batteries are used in one or more suitable applications including information devices, communication devices, vehicles, and/or the like. Vehicles are related to user's wellbeing, and thus the safety thereof is important and critical.

A short circuit in lithium batteries adopting a liquid electrolyte may increase the likelihood of occurrence of fires and/or explosions. All-solid secondary batteries using a solid electrolyte instead of a liquid electrolyte have been proposed. Solid electrolytes have a lower possibility of ignition as compared with liquid electrolytes.

All-solid secondary batteries adopt a solid electrolyte instead of a liquid electrolyte, and thus the likelihood of occurrence of fires and/or explosions may be reduced. All-solid batteries may thus provide improved and desired safety.

### SUMMARY

One or more aspects of embodiments of the present disclosure are directed toward an all-solid secondary battery in which a fibrous carbon-based material and a binder are included in an anode active material layer having an initial charge capacity lower than an initial charge capacity of a cathode active material layer, thereby improving cycle characteristics and suppressing or reducing a change in volume during charging or discharging.

Additional aspects will be set forth in part in the description which follows and, in part, will be apparent from the description, or may be learned by practice of the presented embodiments of the present disclosure.

According to one or more embodiments of the present disclosure, an all-solid secondary battery includes a cathode layer, an anode layer, and a solid electrolyte layer between the cathode layer and the anode layer, wherein the cathode layer includes a cathode current collector and a cathode active material layer on a (e.g., one) side of the cathode current collector, and the anode layer includes an anode current collector and a first anode active material layer on a (e.g., one) side of the anode current collector, wherein the first anode active material layer includes 1) a) a first anode active material (e.g., in a form of particles) and b) a second anode active material (e.g., in a form of particles), each of which (i.e., the first and second anode active materials) is capable of forming an alloy or a compound with lithium, and 2) a fibrous carbon-based material, a ratio (B/A) of an initial charge capacity (B) of the first anode active material layer to an initial charge capacity (A) of the cathode active material layer is in a range of about 0.01 to about 0.75, the initial charge capacity of the cathode active material layer is determined by charging from a 1^{st} open circuit voltage up to a maximum charging voltage vs. Li/Li⁺, and the initial charge capacity of the first anode active material layer is determined by charging from a 2^{nd} open circuit voltage up to a voltage of about 0.01 V vs. Li/Li⁺.

According to one or more embodiments of the present disclosure, an all-solid secondary battery includes a cathode layer, an anode layer, and a solid electrolyte layer between the cathode layer and the anode layer, wherein the cathode layer includes a cathode current collector and a cathode active material layer on a (e.g., one) side of the cathode current collector, and the anode layer includes an anode current collector and a first anode active material layer on a (e.g., one) side of the anode current collector, wherein the first anode active material layer includes 1) a first anode active material (e.g., in a form of particles) capable of forming an alloy or a compound with lithium, 2) a second anode active material (e.g., in a form of particles), and 3) a fibrous carbon-based material.

According to one or more embodiments of the present disclosure, an all-solid secondary battery includes a cathode layer, an anode layer, and a solid electrolyte layer between the cathode layer and the anode layer, wherein the cathode layer includes a cathode current collector and a cathode active material layer on a side (e.g., one side or two opposite sides) of the cathode current collector, the cathode active material layer including a lithium-containing sulfide-based cathode active material (e.g., in a form of particles), and the lithium-containing sulfide-based cathode active material including a Li₂S-containing composite, and the anode layer includes an anode current collector and a first anode active material layer on a (e.g., one) surface of the anode current collector.

### BRIEF DESCRIPTION OF DRAWINGS

The accompanying drawing is included to provide a further understanding of the present disclosure and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a cross-sectional view of an all-solid secondary battery according to one or more embodiments of the present disclosure;
FIG. 2 is a cross-sectional view of an all-solid secondary battery according to one or more embodiments of the present disclosure;
FIG. 3 is a cross-sectional view of an all-solid secondary battery according to one or more embodiments of the present disclosure;
FIG. 4 is a cross-sectional view of an all-solid secondary battery according to one or more embodiments of the present disclosure;
FIG. 5 is a cross-sectional view of an all-solid secondary battery according to one or more embodiments of the present disclosure;
FIG. 6 is a cross-sectional view of an all-solid secondary battery according to one or more embodiments of the present disclosure;
FIG. 7 is a cross-sectional view of an all-solid secondary battery according to one or more embodiments of the present disclosure;
FIG. 8 is a cross-sectional view of an all-solid secondary battery according to one or more embodiments of the present disclosure;
FIG. 9 is a cross-sectional view of an all-solid secondary battery according to one or more embodiments of the present disclosure;
FIG. 10 is a cross-sectional view of an all-solid secondary battery according to one or more embodiments of the present disclosure;
FIG. 11 is a cross-sectional view of an all-solid secondary battery according to one or more embodiments of the present disclosure; and
FIG. 12 is a cross-sectional view of an all-solid secondary battery according to one or more embodiments of the present disclosure.

### DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the presented embodiments may have different forms and should not be construed as being limited to the descriptions set forth herein. Accordingly, the embodiments of the present disclosure are merely described, by referring to the drawings, to explain aspects of the present disclosure. As used herein, the term "and/or" or "or" may include any and all combinations of one or more of the associated listed items. Expressions such as "at least one of," "one of," and "selected from," if preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Unless otherwise defined, all terms (including technical and scientific terms) used in the present disclosure have the same meaning as commonly understood by one of ordinary skill in the art to which the present disclosure belongs. In one or more embodiments, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In one or more embodiments, the embodiments described in the present disclosure should not be construed as limited to the particular shapes of regions illustrated in the present disclosure but may include deviations in shapes that result, for example, from manufacturing. For example, regions illustrated or described as being flat may be typically rough and/or have nonlinear features. Moreover, sharp-drawn angles may be round. In one or more embodiments, regions illustrated in the drawings are schematic in nature and their shapes are not intended to illustrate the actual shape of a region and are not intended to limit the scope of the appended claims.

The present disclosure may, however, be embodied in different forms and should not be construed as limited to one or more embodiments described in the present disclosure. These embodiments are provided so that the present disclosure will be thorough and complete, and will fully convey the scope of the present disclosure to those skilled in the art. Like reference numerals designate like elements.

When it is described that an element is "on" another element, it will be understood that the element may be arranged directly on another element or still another element may be interposed therebetween. In contrast, if (e.g., when) it is described that an element is "directly on" another element, still another element is not interposed therebetween.

It will be understood that, although the terms "first," "second," and "third" may be used herein to describe one or more suitable elements, components, regions, layers, and/or sections, these elements, components, regions, layers, and/or sections should not be limited by these terms. These terms are only used to distinguish one element, component, region, layer, or section from another element, component, region, layer, or section. In one or more embodiments, a first element, component, region, layer, or section described may be termed a second element, component, region, layer, or section without departing from the teachings of the present disclosure.

The term used herein is intended to describe only a specific embodiment and is not intended to limit the present disclosure. As used herein, the singular forms "a," "an," and "the" are intended to include the plural forms, including "at least one," unless the content clearly indicates otherwise. "At least one" should not be construed as being limited to the singular. As used herein, the term "and/or" or "or" may include any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof. Further, the use of "may" when describing embodiments of the present disclosure refers to "one or more embodiments of the present disclosure".

Spatially relative terms such as "beneath," "below," "lower," "above," and "upper" may be used herein to facilitate describing one element or feature's relationship to another element or feature. It will be understood that the spatially relative terms are intended to encompass different orientations of a device in use or operation in addition to the orientation illustrated in the drawings. For example, if (e.g., when) a device in the drawings is turned over, elements or features described as "below" or "beneath" other elements or features would then be "above" or "over" the other elements or features. In one or more embodiments, the example term "below" may encompass both (e.g., simultaneously) orientations of above and below. The device may be otherwise oriented (for example, rotated 90 degrees or at other orientations), and the spatially relative terms used herein may be interpreted accordingly.

The term "Group" as used herein refers to a group of the periodic table of elements according to the International Union of Pure and Applied Chemistry ("IUPAC") Groups 1-18 group classification system.

Unless otherwise defined herein, a particle diameter/size may be an average particle diameter/size. For example, a particle diameter/size may refer to an average particle diameter/size (D50) which refers to a diameter/size of particles with a cumulative volume of 50 vol% in a particle size distribution. The average particle diameter/size (D50) may be measured through methods well suitable to those skilled in the art, for example, by using a particle size analyzer, for example, HORIBA, LA-950 laser particle size analyzer, a transmission electron microscope (TEM), or a scanning electron microscope (SEM). In one or more embodiments, measurement may be performed by using a measuring device using dynamic light-scattering, data analysis is performed to count the number of particles for each particle size range, and then a value of the average particle diameter/size (D50) may be easily obtained therefrom through calculation. In one or more embodiments, the average particle diameter/size (D50) may be measured by using a laser diffraction method. During measurement through laser diffraction, particles to be measured may be dispersed in a dispersion medium to then be introduced into a commercially available laser diffraction particle diameter measuring device (for example, Microtrac MT 3000), 28 kHz ultrasonic waves may be irradiated thereon at an output power of about 60 W, and then the average particle diameter/size (D50) based on 50% of a particle size distribution may calculated in the measuring device.

In the present disclosure, the term "particle diameter" or "particle size" refers to an average diameter/size if (e.g., when) particles are spherical and refers to an average major axis length if (e.g., when) particles are non-spherical. An "average particle diameter/size" refers to, for example, a median particle diameter/size (D50). D50 refers to a particle diameter/size corresponding to a 50% cumulative volume if a particle size distribution measured through a laser diffraction method is calculated from particles having a smaller particle size to particles having a larger particle size.

D90 refers to a particle diameter/size corresponding to a 90% cumulative volume if a particle size distribution measured through a laser diffraction method is calculated from particles having a smaller particle size to particles having a larger particle size.

D10 refers to a particle diameter/size corresponding to a 10% cumulative volume if a particle size distribution measured through a laser diffraction method is calculated from particles having a smaller particle size to particles having a larger particle size.

The term "metal" as used herein includes all of metals and metalloids, such as silicon and germanium, in an elemental state or an ionic state.

The term "alloy" as used herein refers to a mixture or a combination of two or more metals.

The term "electrode active material" as used herein refers to an electrode material that may undergo lithiation and delithiation.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

While example embodiments will be described herein, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications, variations, improvements, and substantial equivalents.

Hereinafter, all-solid secondary batteries according to one or more embodiments will be described in more detail.

### All-solid secondary battery

An all-solid secondary battery according to one or more embodiments may include a cathode layer, an anode layer, and a solid electrolyte layer between the cathode layer and the anode layer, wherein the cathode layer includes a cathode current collector and a cathode active material layer on a side (e.g., one side or two opposite sides) of the cathode current collector, and the anode layer includes an anode current collector and a first anode active material layer on a (e.g., one) side of the anode current collector, wherein the first anode active material layer includes 1) a) a first anode active material (e.g., in a form of particles) and b) a second anode active material (e.g., in a form of particles), each of which is capable of forming an alloy or a compound with lithium, and 2) a fibrous carbon-based material, a ratio (B/A) of an initial charge capacity (B) of the first anode active material layer to an initial charge capacity (A) of the cathode active material layer is in a range of about 0.01 to about 0.75, the initial charge capacity of the cathode active material layer is determined by charging from a 1^{st} open circuit voltage (OCV) up to a maximum charging voltage vs. Li/Li⁺, and the initial charge capacity of the first anode active material layer is determined by charging from a 2^{nd} OCV up to a voltage of about 0.01 V vs. Li/Li⁺.

The fibrous carbon-based material may provide a conducting (e.g., electron conducting) path between a plurality of anode active materials (e.g., plurality of anode active material particles) so that an increase in internal resistance of the first anode active material layer may be more easily suppressed or reduced. An increase in internal resistance of the all-solid secondary battery may be suppressed or reduced.

The fibrous carbon-based material may serve as a support/buffer between the plurality of anode active material particles so that a change in volume of the first anode active material layer due to precipitation and/or dissolution of lithium during charging or discharging may be effectively alleviated. In one or more embodiments, a change in volume of the all-solid secondary battery during charging or discharging may be reduced.

In one or more embodiments, a binder may be included to bind the anode active material and the fibrous carbon-based material, thereby more effectively suppressing or reducing the disconnection of a conducting path between the anode active material and the fibrous carbon-based material due to a change in volume of the anode active material in a process of precipitating and/or dissolving lithium during charging or discharging. Non-uniformity in an electrode reaction of the all-solid secondary battery may also be suppressed or reduced.

The binder may also improve a binding force between the first anode active material layer and the solid electrolyte layer and/or between the first anode active material layer and the anode current collector. For example, the binder may improve wettability between the first anode active material layer and the solid electrolyte layer and/or between the first anode active material layer and the anode current collector. In one or more embodiments, the binder may more effectively reduce an increase in interfacial resistance caused by the formation and/or the like of pores between the first anode active material layer and the solid electrolyte layer and/or between the first anode active material layer and the anode current collector. The cycle characteristics of the all-solid secondary battery may be improved.

If (e.g., when) the first anode active material layer does not include a binder, the first anode active material layer may be separated from the solid electrolyte layer and/or the anode current collector, and thus a surface of the solid electrolyte layer and/or a surface of the anode current collector may be exposed. For example, the exposed anode current collector may cause a short circuit. The cycle characteristics of the all-solid secondary battery may deteriorate.

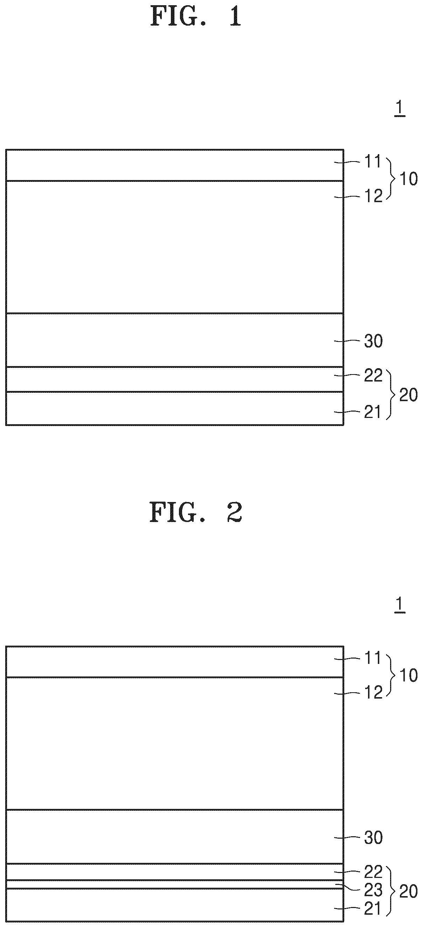

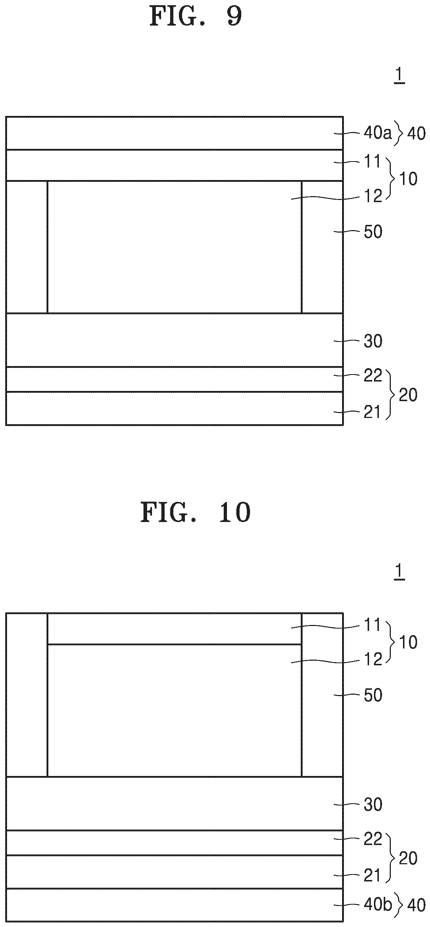

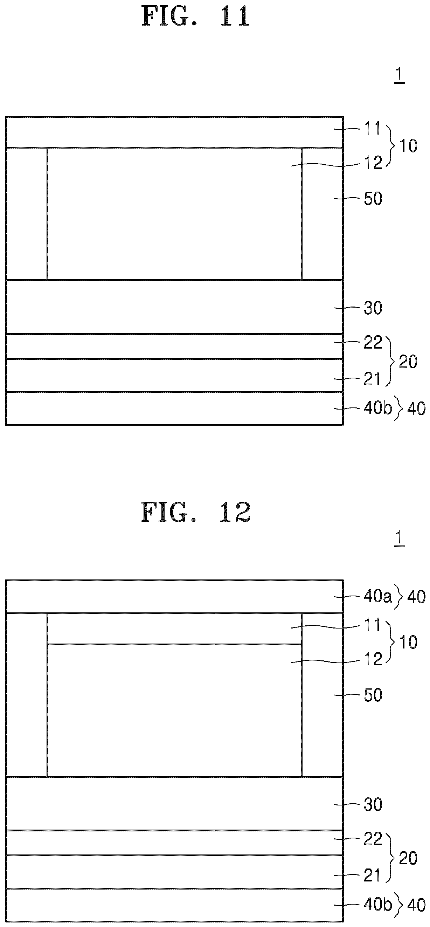

Referring to FIGS. 1 to 12, an all-solid secondary battery 1 may include a cathode layer 10, an anode layer 20, and a solid electrolyte layer 30 between the cathode layer 10 and the anode layer 20. The cathode layer 10 may include a cathode current collector 11 and a cathode active material layer 12 on a (e.g., one) side of the cathode current collector 11. The anode layer 20 may include an anode current collector 21 and a first anode active material layer 22 on a (e.g., one) side of the anode current collector 21. The first anode active material layer 22 may include 1) a) a first anode active material (e.g., in a form of particles) and b) a second anode active material (e.g., in a form of particles), each of which is capable of forming an alloy or a compound with lithium, and 2) a fibrous carbon-based material. A ratio (B/A) of an initial charge capacity (B) of the first anode active material layer 22 to an initial charge capacity (A) of the cathode active material layer 12 may be in a range of about 0.01 to about 0.75. The initial charge capacity of the cathode active material layer 12 may be determined by charging from a 1^{st} OCV up to a maximum charging voltage vs. Li/Li⁺. The initial charge capacity of the first anode active material layer 22 may be determined by charging from a 2^{nd} OCV up to a voltage of about 0.01 V vs. Li/Li⁺.

### Anode layer

### Anode layer: First anode active material

Referring to FIGS. 1 to 12, the anode layer 20 may include the first anode active material layer 22. The first anode active material layer 22 may include a first anode active material capable of forming an alloy or a compound with lithium.

The first anode active material may be, for example, an anode material capable of forming an alloy with lithium or an anode material capable of forming a compound with lithium.

The first anode active material layer 22 may include the first anode active material, and the first anode active material may have, for example, a particle form. A size of the first anode active material having the particle form may be, for example, 2 micrometers (µm) or less, 1 µm or less, 500 nanometers (nm) or less, 300 nm or less, or 200 nm or less. In one or more embodiments, the size of the anode active material having the particle form may be, for example, in a range of about 100 nm to about 2 µm, about 100 nm to about 2 µm, about 200 nm to about 2 µm, about 500 nm to about 2 µm, or about 500 nm to about 1.5 µm. In one or more embodiments, the size of the first anode material having the particle form may be, for example, in a range of about 10 nm to about 2 µm, about 10 nm to about 1 µm, about 10 nm to about 500 nm, about 10 nm to about 300 nm, about 10 nm to about 200 nm, or about 10 nm to about 100 nm. The first anode active material may have a size in such a range and thus may efficiently perform reversible absorbing and/or desorbing of lithium during charging or discharging. The size of the first anode active material may be, for example, an average particle diameter of the first anode active material. The average particle diameter of the first anode active material may be, for example, a median diameter (D50) measured by using a laser particle size distribution meter.

An aspect ratio of the first anode active material may be, for example, 5 or less, 4 or less, 3 or less, or 2 or less. In one or more embodiments, the aspect ratio of the first anode active material may be, for example, in a range of about 1 to about 5, about 1 to about 4, about 1 to about 3, or about 1 to about 2. The first anode active material may have an aspect ratio in such a range and thus may be more uniformly (e.g., substantially uniformly) distributed in the first anode active material layer 22. In one or more embodiments, non-uniformity in a change in volume of the first anode active material during charging or discharging may be suppressed or reduced. The aspect ratio of the first anode material may be measured, for example, by using a scanning electron microscope (SEM).

In one or more embodiments, the first anode active material included in the first anode active material layer 22 may include, for example, a first metal-based anode active material.

The first metal-based anode active material includes, for example, silicon (Si), gold (Au), platinum (Pt), palladium (Pd), silver (Ag), aluminum (Al), bismuth (Bi), tin (Sn), zinc (Zn), and/or a (e.g., any suitable) combination thereof, but embodiments of the present disclosure are not necessarily limited thereto. Any material (suitable material) may be used as long as the material may be used as a metal-based anode active material capable of forming an alloy or a compound with lithium in the art. For example, nickel (Ni) may not form an alloy with lithium and thus may not be a metal-based anode active material.

### Anode layer: Fibrous carbon-based material

The first anode active material layer 22 may include a fibrous carbon-based material in addition to the first anode active material.

In one or more embodiments, the first anode active material layer 22 may include a mixture of a fibrous carbon-based material and a first anode active material capable of forming an alloy or a compound with lithium. For example, in one or more embodiments, the first anode active material layer 22 may include a mixture of a fibrous carbon-based material and at least one first anode active material selected from among silicon (Si), gold (Au), platinum (Pt), palladium (Pd), silver (Ag), aluminum (Al), bismuth (Bi), tin (Sn), and zinc (Zn). A mixing ratio of the mixture of 1) the fibrous carbon-based material and 2) silicon and/or the like (e.g., mixing ratio of the fibrous carbon-based material to silicon and/or the like) may be a weight ratio that is, for example, in a range of about 99:1 to about 1:99, about 10:1 to about 1:10, about 1:1 to about 1:9, about 1:1 to about 1:8, about 1:1 to about 1:7, about 1:1 to about 1:6, about 1:1 to about 1:5, about 1:1 to about 1:4, or about 1:1 to about 1:3, but embodiments of the present disclosure are not necessarily limited to such a range. The mixing ratio of the mixture may be selected according to the desired or required characteristics of the all-solid secondary battery 1. The fibrous carbon-based material and the first anode active material may have such a composition, and thus the cycle characteristics of the all-solid secondary battery 1 may be further improved.

In one or more embodiments, the first anode active material layer 22 may include a mixture of first particles including (e.g., consisting of) a metal and second particles including (e.g., consisting of) a fibrous carbon-based material. The metal may include, for example, silicon (Si), gold (Au), platinum (Pt), palladium (Pd), silver (Ag), aluminum (Al), bismuth (Bi), tin (Sn), zinc (Zn). and/or a (e.g., any suitable) combination thereof. A content (e.g., amount) of the second particles may be in a range of about 1 wt% to about 99 wt%, about 1 wt% to about 70 wt%, more than 10 wt% to about 70 wt%, about 11 wt% to about 60 wt%, or about 12 wt% to about 50 wt% with respect to a total weight of 100 wt% of the mixture. The fibrous carbon-based material may have a content (e.g., amount) in such a range and thus, for example, the cycle characteristics of the all-solid secondary battery 1 may be further improved.

For example, the size of the first anode active material capable of forming an alloy or a compound with lithium may be less than a length of the fibrous carbon-based material. The length of the fibrous carbon-based material may be greater than the size of the first anode active material, and thus the fibrous carbon-based material may serve as a support and/or buffer between the plurality of first anode active materials (e.g., between the plurality of first anode active material particles). The fibrous carbon-based material may be arranged between the plurality of first anode active materials to effectively relieve stress caused by a change in volume of the first anode active material due to precipitation and/or dissolution of lithium during charging or discharging. In one or more embodiments, a change in volume of the first anode active material layer 22 during charging or discharging may be more effectively suppressed or reduced. A ratio of the size of the first anode material to the length of the fibrous carbon-based material may be, for example, in a range of about 1:10 to about 1:2,000, about 1:10 to about 1:1,000, about 1:10 to about 1:500, about 1:10 to about 1:200, about 1:10 to about 1:100, about 1:10 to about 1:50, or about 1:10 to about 1:20. The ratio of the size of the first anode material to the length of the fibrous carbon-based material may be in such a range and thus, for example, the cycle characteristics of the all-solid secondary battery 1 may be further improved.

The fibrous carbon-based material may be, for example, a conductive carbon-based material. The fibrous carbon-based material may have conductivity (i.e., being an electron conductor) and thus may provide a conducting path inside the first anode active material layer 22. The fibrous carbon-based material may more effectively reduce the internal resistance of the first anode active material layer 22. In one or more embodiments, the cycle characteristics of the all-solid secondary battery 1 may be improved. The first anode active material layer 22 may not additionally include other carbon-based conductive materials other than the fibrous carbon-based material. The first anode active material layer 22 may not include (e.g., may exclude) other carbon-based conductive materials other than the fibrous carbon-based material, and thus the energy density of the first anode active material layer 22 may be further improved.

In one or more embodiments, an aspect ratio of the fibrous carbon-based material may be, for example, 10 or more, 20 or more, 30 or more, or 50 or more. In one or more embodiments, the aspect ratio of the fibrous carbon-based material may be, for example, 2,000 or less, 1,000 or less, 500 or less, 200 or less, or 100 or less. In one or more embodiments, the aspect ratio of the fibrous carbon-based material may be, for example, in a range of about 10 to about 2,000, about 20 to about 2,000, about 30 to about 2,000, or about 50 to about 2,000. In one or more embodiments, the aspect ratio of the fibrous carbon-based material may be, for example, in a range of about 10 to about 2,000, about 10 to about 1,000, about 10 to about 500, about 10 to about 200, about 10 to about 100, about 10 to about 50, or about 10 to about 20. The aspect ratio of the fibrous carbon-based material may be, for example, a ratio of a length of a major axis of the fibrous carbon-based material, that is, the length of the fibrous carbon-based material, to a length of a minor axis normal (e.g., perpendicular) to the major axis, that is, a diameter of the fibrous carbon-based material. The "aspect ratio" used herein may refer to the average aspect ratio and may be determined from SEM images. The fibrous carbon-based material may have an aspect ratio in such a range and thus, due to the fibrous carbon-based material, a conducting path inside the first anode active material layer 22 may be made (or be present to be) longer. The fibrous carbon-based material may form a three-dimensional conductive network in the first anode active material layer 22, thereby more effectively reducing the internal resistance of the first anode active material layer 22. In one or more embodiments, the internal resistance of the all-solid secondary battery 1 may be reduced. For example, the high-rate characteristics of the all-solid secondary battery 1 may be improved.

The fibrous carbon-based material may include, for example, an amorphous fibrous carbon-based material, a crystalline fibrous carbon-based material, and/or a (e.g., any suitable) combination thereof. In one or more embodiments, the fibrous carbon-based material may include the amorphous fibrous carbon-based material, and thus side reactions between lithium and the fibrous carbon-based material may be more effectively suppressed or reduced. The reversibility of an electrode reaction during charging or discharging of the all-solid secondary battery 1 may be improved, thereby improving the cycle characteristics of the all-solid secondary battery 1.

The diameter of the fibrous carbon-based material may be, for example, 50 nm or less, 30 nm or less, 20 nm or less, or 10 nm or less. In one or more embodiments, the diameter of the fibrous carbon-based material may be, for example, in a range of about 1 nm to about 50 nm, about 1 nm to about 30 nm, or about 1 nm to about 10 nm. The fibrous carbon-based material may have a diameter in such a range so that the internal resistance of the first anode active material layer 22 may be effectively reduced and the fibrous carbon-based material may be easily dispersed in a solvent and/or a slurry during preparation of the first anode active material layer 22.

The length of the fibrous carbon-based material may be, for example, 1,000 µm or less, 100 µm or less, 50 µm or less, 10 µm or less, 5 µm or less, 2 µm or less, 1 µm or less, 500 nm or less, or 300 nm or less. In one or more embodiments, the length of the fibrous carbon-based material may be for example, in a range of about 100 nm to about 1,000 µm, about 100 nm to about 500 µm, about 100 nm to about 100 µm, about 100 nm to about 50 µm, about 100 nm to about 10 µm, about 100 nm to about 5 µm, about 100 nm to about 2 µm, about 100 nm to about 1 µm, about 100 nm to about 500 nm, or about 100 nm to about 300 nm. In one or more embodiments, the length of the fibrous carbon-based material may be, for example, in a range of about 500 nm to about 1,000 µm, about 500 nm to about 500 µm, about 500 nm to about 100 µm, about 500 nm to about 50 µm, about 500 nm to about 10 µm, about 1 µm to about 10 µm, or about 2 µm to about 8 µm. As the length of the fibrous carbon-based material increases, the internal resistance of an electrode may decrease.

The fibrous carbon-based material may include, for example, fibrous carbon nanostructures. The fibrous carbon nanostructures may include, for example, carbon nanofibers (CNFs), carbon nanotubes (CNTs), carbon nanobelts, and/or a (e.g., any suitable) combination thereof.

The CNTs may include, for example, a carbon nanotube primary structure, a carbon nanotube secondary structure formed by aggregation of a plurality of carbon nanotube primary structures/particles, and/or a (e.g., any suitable) combination thereof.

The carbon nanotube primary structure may be one (e.g., exactly one) carbon nanotube unit. The carbon nanotube unit may have a graphite sheet in the form of a cylinder with a nano-sized diameter and may have an *sp²* bond structure. According to an angle and a structure at which the graphite sheet is bent, the characteristics of a conductor or the characteristics of a semiconductor may be exhibited. The carbon nanotube unit may be classified into a single-walled carbon nanotube (SWCNT), a double-walled carbon nanotube (DWCNT), or a multi-walled carbon nanotube (MWCNT) according to the number of bonds constituting a wall. That is, carbon nanotubes can be categorized into three main types or kinds: single-walled carbon nanotubes (SWCNTs), double-walled carbon nanotubes (DWCNTs), and multi-walled carbon nanotubes (MWCNTs). As a wall thickness of the carbon nanotube unit decreases, resistance may be lowered.

The carbon nanotube primary structure may include, for example, an SWCNT, a DWCNT, an MWCNT, and/or a (e.g., any suitable) combination thereof. A diameter of the carbon nanotube primary structure may be, for example, 1 nm or more or 2 nm or more. The diameter of the carbon nanotube primary structure may be, for example, 20 nm or less or 10 nm or less. In one or more embodiments, the diameter of the carbon nanotube primary structure may be, for example, in a range of about 1 nm to about 20 nm, about 1 nm to about 15 nm, or about 1 nm to about 10 nm. A length of the carbon nanotube primary structure may be, for example, 100 nm or more or 200 nm or more. The length of the carbon nanotube primary structure may be, for example, 2 µm or less, 1 µm or less, 500 nm or less, or 300 nm or less. In one or more embodiments, the length of the carbon nanotube primary structure may be, for example, in a range of about 100 nm to about 2 µm, about 100 nm to about 1 µm, about 100 nm to about 500 nm, about 100 nm to about 400 nm, about 100 nm to about 300 nm, or about 200 nm to about 300 nm. The diameter and the length of the carbon nanotube primary structure may be measured from an SEM image or a transmission electron microscope (TEM) image. In one or more embodiments, the diameter and/or the length of the carbon nanotube primary structure may be measured through laser diffraction.

The carbon nanotube secondary structure may be a structure formed by carbon nanotube primary structures being entirely or partially clustered to constitute a bundle-type or kind or rope-type or kind nanostructure. The carbon nanotube secondary structure may include, for example, bundle-type or kind CNTs, rope-type or kind CNTs, and/or a (e.g., any suitable) combination thereof. A diameter of the carbon nanotube secondary structure may be, for example, 2 nm or more or 3 nm or more. The diameter of the carbon nanotube secondary structure may be, for example, 50 nm or less, 30 nm or less, 20 nm or less, or 10 nm or less. In one or more embodiments, the diameter of the carbon nanotube secondary structure may be, for example, in a range of about 2 nm to about 50 nm, about 2 nm to about 30 nm, or about 2 nm to about 20 nm. A length of the carbon nanotube secondary structure may be, for example, 500 nm or more, 700 nm or more, 1 µm or more, or 10 µm or more. The length of the carbon nanotube secondary structure may be, for example, 1,000 µm or less, 500 µm or less, or 100 µm, or less. In one or more embodiments, the length of the carbon nanotube secondary structure may be, for example, in a range of about 500 nm to 1,000 µm, about 500 nm to about 500 µm, about 500 nm to about 200 µm, about 500 nm to about 100 µm, about 500 nm to about 50 µm, about 500 nm to about 10 µm, about 1 µm to about 10 µm, or about 2 µm to about 8 µm. The diameter and the length of the carbon nanotube secondary structure may be measured from an SEM image or by an optical microscope. In one or more embodiments, the diameter and/or the length of the carbon nanotube secondary structure may be measured through laser diffraction.

The carbon nanotube secondary structure may be dispersed, for example, in a solvent and/or the like to be converted into a carbon nanotube primary structure and then may be used to prepare the first anode active material layer 22.

### Anode layer: Second anode active material

Referring to FIGS. 1 to 12, the anode layer 20 may include the first anode active material layer 22. The first anode active material layer 22 may include a second anode active material.

The second anode active material may be, for example, an anode material capable of forming an alloy with lithium or an anode material capable of forming a compound with lithium. The second anode active material may be distinguished from the first anode active material. For example, a size of the second anode active material may be smaller than a size of the first anode active material. In one or more embodiments, the size of the second anode active material may be, for example, 80% or less, 60% or less, 40% or less, 20% or less, or 10% or less of the size of the first anode active material.

The first anode active material layer 22 may include the second anode active material, and the second anode active material may have, for example, a particle form (e.g., in a form of particles). The size of the second anode material having the particle form may be, for example, less than 1 µm, 500 nm or less, 300 nm or less, or 100 nm or less. In one or more embodiments, the size of the second anode material having the particle form may be, for example, in a range of about 10 nm to less than 1 µm, about 10 nm to about 900 nm, about 10 nm to about 700 nm, about 10 nm to about 500 nm, about 10 nm to about 300 nm, about 10 nm to about 200 nm, or about 10 nm to about 100 nm. The second anode active material may have a size in such a range and thus may more effectively perform reversible absorbing and/or desorbing of lithium during charging or discharging. The size of the second anode active material may be, for example, an average particle diameter of the second anode active material. The average particle diameter of the second anode active material may be, for example, a median diameter (D50) measured by using a laser particle size distribution meter.

An aspect ratio of the second anode active material may be, for example, 5 or less, 4 or less, 3 or less, or 2 or less. In one or more embodiments, the aspect ratio of the second anode active material may be, for example, in a range of about 1 to about 5, about 1 to about 4, about 1 to about 3, or about 1 to about 2. The second anode active material may have an aspect ratio in such a range and thus may be more uniformly (e.g., substantially uniformly) distributed in the first anode active material layer 22. In one or more embodiments, non-uniformity in a change in volume of the second anode active material during charging or discharging may be suppressed or reduced. The aspect ratio of the second anode material may be measured, for example, by using an SEM.

In one or more embodiments, the second anode active material included in the first anode active material layer 22 may include, for example, a carbon-based anode active material, a second metal-based anode active material, which is distinguished from the first anode active material, and/or a (e.g., any suitable) combination thereof.

The carbon-based anode active material may include, for example, amorphous carbon, crystalline carbon, porous carbon, and/or a (e.g., any suitable) combination thereof.

In one or more embodiments, the carbon-based anode active material may be, for example, amorphous carbon. Examples of the amorphous carbon may include carbon black (CB), acetylene black (AB), furnace black (FB), Ketjen black (KB), graphene, and/or the like, but embodiments of the present disclosure are not necessarily limited thereto. Any material may be used as long as the material may be classified as amorphous carbon in the art. The amorphous carbon may be carbon that has no crystallinity or very low crystallinity and may be distinguished from crystalline carbon or graphite-based carbon.

In one or more embodiments, the carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 m²/g to about 3,000 m²/g.

The second metal-based anode active material may include at least one selected from among gold (Au), platinum (Pt), palladium (Pd), silver (Ag), aluminum (Al), bismuth (Bi), tin (Sn), and zinc (Zn), but embodiments of the present disclosure are not necessarily limited thereto. Any material may be used as long as the material may be used as a metal anode active material or a metalloid anode active material which forms an alloy or a compound with lithium in the art. For example, nickel (Ni) may not form an alloy with lithium and thus may not be a metal anode active material.

The first anode active material layer 22 may include one type or kind of second anode active material among such second anode active materials and/or a (e.g., any suitable) mixture of a plurality of different second anode active materials. For example, in one or more embodiments, the first anode active material layer 22 may include only amorphous carbon or may include at least one selected from among gold (Au), platinum (Pt), palladium (Pd), silver (Ag), aluminum (Al), bismuth (Bi), tin (Sn), and zinc (Zn). In one or more embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture of the amorphous carbon to gold, for example, and/or the like may be, for example, a weight ratio in a range of about 99:1 to about 1:99, about 10:1 to about 1:2, about 5:1 to about 1:1, or about 4:1 to about 2:1, but embodiments of the present disclosure are not necessarily limited to such a range. The mixing ratio may be selected according to the desired or required characteristics of the all-solid secondary battery 1. The second anode active material may have such a composition, and thus the cycle characteristics of the all-solid secondary battery 1 may be further improved.

In one or more embodiments, the second anode active material included in the first anode active material layer 22 may include, for example, a mixture of first particles including (e.g., consisting of) amorphous carbon and second particles including (e.g., consisting of) a second metal-based anode active material. Non-limiting examples of the second metal-based anode active material may include gold (Au), platinum (Pt), palladium (Pd), silver (Ag), aluminum (Al), bismuth (Bi), tin (Sn), zinc ( Zn), and/or the like. A content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of 100 wt% of the mixture. The second particles may have a content (e.g., amount) in such a range and thus, for example, the cycle characteristics of the all-solid secondary battery 1 may be further improved.

In one or more embodiments, the first anode active material layer 22 may include the second anode active material, and the second anode active material may include, for example, a composite anode active material. The composite anode active material may include, for example, a carbon-based support and a metal-based anode active material supported on the carbon-based support. The composite anode active material may have such a structure so that the localization of the metal-based anode active material in the first anode active material layer 22 may be prevented or reduced, and the substantially uniform distribution thereof may be obtained. In one or more embodiments, the cycle characteristics of the all-solid secondary battery 1 including such first anode active material layer 22 may be further improved.

The metal-based anode active material supported on the carbon-based support may include, for example, a metal, a metal oxide, a composite of a metal and a metal oxide, and/or a (e.g., any suitable) combination thereof. Non-limiting examples of the metal may include gold (Au), platinum (Pt), palladium (Pd), silver (Ag), aluminum (Al), bismuth (Bi), tin (Sn), tellurium (Te), zinc (Zn), and/or the like. Non-limiting examples of the metal oxide may include gold (Au) oxide, platinum (Pt) oxide, palladium (Pd) oxide, silver (Ag) oxide, aluminum (Al) oxide, bismuth (Bi) oxide, tin ( Sn) oxide, tellurium (Te) oxide, zinc (Zn) oxide, and/or the like. The metal oxide may include, for example, AuₓO_{y}, wherein 0<x≤2 and 0<y≤3, PtₓO_{y}, wherein 0<x≤1 and 0<y≤2, PdₓO_{y}, wherein 0<x≤1 and 0<y≤1, AgₓO_{y}, wherein 0<x≤2 and 0<y≤1, AlₓO_{y}, wherein 0<x≤2 and 0<y≤3, BiₓO_{y}, wherein 0<x≤2 and 0<y≤3, SnₓO_{y}, wherein 0<x≤1 and 0<y≤2, TeₓO_{y}, wherein 0<x≤1 and 0<y≤3, ZnₓO_{y}, wherein 0<x≤1 and 0<y≤1, and/or a (e.g., any suitable) combination thereof. In one or more embodiments, the composite of the metal and the metal oxide may include, for example, a composite of Au and AuₓO_{y}, wherein 0<x≤2 and 0<y≤3, a composite of Pt and PtₓO_{y}, wherein 0<x≤1 and 0<y≤2, a composite of Pd and PdₓO_{y}, wherein 0<x≤1 and 0<y≤1, a composite of Ag and AgₓO_{y}, wherein 0<x≤2 and 0<y≤1, a composite of Al and AlₓO_{y}, wherein 0<x≤2 and 0<y≤3, a composite of Bi and BiₓO_{y}, wherein 0<x≤2 and 0<y≤3, a composite of Sn and SnₓO_{y}, wherein 0<x≤1 and 0<y≤2, a composite of Te and TeₓO_{y}, wherein 0<x≤1 and 0<y≤3, a composite of Zn and ZnₓO_{y}, wherein 0<x≤1 and 0<y≤1, and/or a (e.g., any suitable) combination thereof.

The carbon-based support may include, for example, amorphous carbon. Examples of the amorphous carbon may include carbon black (CB), acetylene black (AB), furnace black (FB), Ketjen black (KB), graphene, activated carbon, and/or the like, but embodiments of the present disclosure are not necessarily limited thereto. Any material may be used as long as the material may be classified as amorphous carbon in the art. The amorphous carbon may be carbon that has no crystallinity or very low crystallinity and may be distinguished from crystalline carbon or graphite-based carbon.

In one or more embodiments, the composite anode active material may have, for example, a particle form (e.g., in a form of particles). A particle diameter of the composite anode active material having the particle form may be, for example, in a range of about 10 nm to about 2 µm, about 10 nm to about 1 µm, about 10 nm to about 500 nm, about 10 nm to about 200 nm, or about 10 nm to about 100 nm. The composite anode active material may have a particle diameter in such a range and thus the reversible absorbing and/or desorbing of lithium may become easier during charging/discharging. The metal-based anode active material supported on the carbon-based support may have, for example, a particle form (e.g., in a form of particles). A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form (e.g., in a form of particles). A particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. The carbon-based support may have a particle diameter in such a range and thus may be more uniformly (e.g., substantially uniformly) arranged in the first anode active material layer 22. In one or more embodiments, the carbon-based support may include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by using a laser type or kind particle size distribution analyzer. In one or more embodiments, the average particle diameter may be determined automatically by using software, for example, from an electron microscope image or may be manually determined according to a manual computation.

### Anode layer: Binder

In one or more embodiments, the first anode active material layer 22 may include a binder. The binder may be, for example, a polymer binder. The binder included in the first anode active material layer 22 may be, for example, a styrene-butadiene rubber (SBR), polytetrafluoroethylene (PTFE), polyvinylidene fluoride (PVDF), polyethylene (PE), a vinylidene fluoride/hexafluoropropylene copolymer, polyacrylonitrile (PAN), polymethyl methacrylate, and/or the like, but embodiments of the present disclosure are not necessarily limited thereto. Any material may be used as long as the material may be used as a binder in the art. The binder may be provided as a single binder or a plurality of different binders. In one or more embodiments, the binder may include, for example, a fluorine-based binder.

The first anode active material layer 22 may include the binder and thus may be stabilized on the anode current collector 21. In one or more embodiments, cracks of the first anode active material layer 22 may be suppressed or reduced despite changes in volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the solid electrolyte layer 30, which may cause an increase in possibility of the occurrence of a short circuit. In one or more embodiments, the first anode active material layer 22 may be formed, for example, by applying a slurry, in which a material constituting the first anode active material layer 22 is dispersed, onto the anode current collector 21 and drying the slurry. The first anode active material layer 22 may include the binder so that an anode active material and a fibrous carbon-based material may be stably dispersed in a slurry. For example, if (e.g., when) the slurry is applied onto the anode current collector 21 through screen printing, the clogging of a screen (for example, clogging by aggregates of an anode active material) may be suppressed or reduced.

A content (e.g., amount) of the binder may be in a range of about 0.1 parts by weight to about 20 parts by weight, about 0.1 parts by weight to about 15 parts by weight, about 1 part by weight to about 10 parts by weight, or about 5 parts by weight to about 10 parts by weight with respect to 100 parts by weight of a mixture of the first anode active material and the second anode active material. The content (e.g., amount) of the binder may be in such a range, and thus the cycle characteristics of the all-solid secondary battery 1 may be further improved.

### Anode layer: Other additives

In one or more embodiments, the first anode active material layer 22 may further include one or more additives used in the all-solid secondary battery 1 according to a related art, such as a filler, a coating agent, a dispersant, and a conductive adjuvant.

### Anode layer: First anode active material layer

The initial charge capacity (B) of the first anode active material layer 22 may be, for example, 75% or less, 70% or less, 60% or less, 50% or less, 40% or less, 30% or less, 20% or less, or 10% or less of the initial charge capacity (A) of the cathode active material layer 12.

In one or more embodiments, the ratio (B/A) of the initial charge capacity (B) of the first anode active material layer 22 to the initial charge capacity (A) of the cathode active material layer 12 may be, for example, in a range of about 0.01 to about 0.75, about 0.01 to about 0.7, about 0.01 to about 0.6, about 0.01 to about 0.5, about 0.01 to about 0.4, about 0.01 to about 0.3, about 0.01 to about 0.2, or about 0.01 to about 0.1. in one or more embodiments, the ratio (B/A) of the initial charge capacity (B) of the first anode active material layer 22 to the initial charge capacity (A) of the cathode active material layer 12 may be, for example, in a range of about 0.05 to about 0.75, about 0.1 to about 0.7, about 0.1 to about 0.6, about 0.2 to about 0.6, about 0.2 to about 0.5, or about 0.2 to about 0.45. The initial charge capacity of the cathode active material layer 12 may be determined by charging from a 1^{st} OCV up to a maximum charging voltage vs. Li/Li⁺. The initial charge capacity of the first anode active material layer 22 may be determined by charging from a 2^{nd} OCV up to a voltage of about 0.01 V vs. Li/Li⁺. The maximum charging voltage may be determined according to types (kinds) of cathode active materials. The maximum charging voltage may be, for example, a voltage of about 1.5 V, about 2.0 V, about 2.5 V, about 3.0 V, about 3.5 V, about 4.0 V, about 4.2 V, or about 4.3 V. For example, in one or more embodiments, the maximum charge voltage of Li₂S or a Li₂S composite may be determined between about 2.5 V and about 3.0 V vs. Li/Li⁺. For example, in one or more embodiments, the maximum charging voltage of a lithium transition metal oxide may be determined between about 3.0 V and about 4.5 V vs. Li/Li⁺.

The initial charge capacity (mAh) of the cathode active material layer 12 may be obtained by multiplying a charge specific capacity (mAh/g) of a cathode active material by a mass (g) of the cathode active material in the cathode active material layer 12. If (e.g., when) one or more suitable types (kinds) of cathode active materials are used, a value of charge specific capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of an anode active material by a mass of the anode active material in the first anode active material layer 22. If (e.g., when) one or more suitable types (kinds) of anode active materials are used, a value of charge specific capacity×mass may be calculated for each anode active material, and the sum of the values may be the initial charge capacity of the first anode active material layer 22. The charge specific capacity of each of the cathode active material(s) and the anode active material(s) may be measured by using a solid half-cell that uses a lithium metal as a counter electrode. The initial charge capacity of each of the cathode active material layer 12 and the first anode active material layer 22 may be directly measured at a constant current density, for example, about 0.1 mA/cm² by using an all-solid half-cell. The measurement may be performed on a cathode at an operating voltage from a 1^{st} OCV up to a maximum charging voltage of, for example, about 3.0 V (vs. Li/Li⁺). The measurement may be performed on an anode at an operating voltage from a 2^{nd} OCV up to a voltage of about 0.01 V for the anode, for example, a lithium metal. For example, in one or more embodiments, an all-solid half-cell including the cathode active material layer 12 may be charged at a constant current of 0.1 mA/cm² from a 1^{st} OCV up to a voltage of about 3.0 V. An all-solid half-cell including the first anode active material layer 22 may be charged at a constant current of 0.1 mA/cm² from a 2^{nd} OCV up to a voltage of about 0.01 V. A current density during constant current charging may be, for example, about 0.2 mA/cm² or about 0.5 mA/cm². In one or more embodiments, the all-solid half-cell including the cathode active material layer 12 may be charged, for example, from a 1^{st} OCV up to a voltage of about 2.5 V, about 2.0 V, about 3.5 V, about 4.0 V, or 4.5 V. A maximum charging voltage of a cathode active material layer may be determined by a maximum voltage of a battery that satisfies the safety conditions according to JIS C 8712:2015 of the Japanese Standards Association.

If (e.g., when) the initial charge capacity of the first anode active material layer 22 is excessively (or substantially) low, the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the all-solid secondary battery 1. If (e.g., when) the charge capacity of the first anode active material layer 22 excessively (or substantially) increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1.

A thickness of the first anode active material layer 22 may be, for example, 50% or less, 40% or less, 30% or less, 20% or less, or 10% or less of a thickness of the cathode active material layer 12. In one or more embodiments, the thickness of the first anode active material layer 22 may be, for example, in a range of about 1% to about 50%, about 1% to about 40%, about 1% to about 30%, about 1% to about 20%, or about 1% to about 10% of the thickness of the cathode active material layer 12. In one or more embodiments, the thickness of the first anode active material layer 22 may be, for example, in a range of about 1 µm to about 50 µm, about 2 µm to about 40 µm, about 3 µm to about 30 µm, about 4 µm to about 20 µm, or about 5 µm to about 20 µm. In one or more embodiments, the thickness of the first anode active material layer 22 may be, for example, in a range of about 5 µm to about 50 µm, about 10 µm to about 50 µm, about 15 µm to about 50 µm, about 20 µm to about 50 µm, or about 25 µm to about 50 µm. If (e.g., when) the first anode active material layer 22 is excessively (or substantially) thin, lithium dendrites formed between the first anode active material layer 22 and the anode current collector 21 may collapse the first anode active material layer 22, which may make it difficult to improve the cycle characteristics of the all-solid secondary battery 1. If (e.g., when) the thickness of the first anode active material layer 22 excessively (or substantially) increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1. If (e.g., when) the thickness of the first anode active material layer 22 decreases, for example, the initial charge capacity of the first anode active material layer 22 may also decrease.

### Anode layer: Second anode active material layer

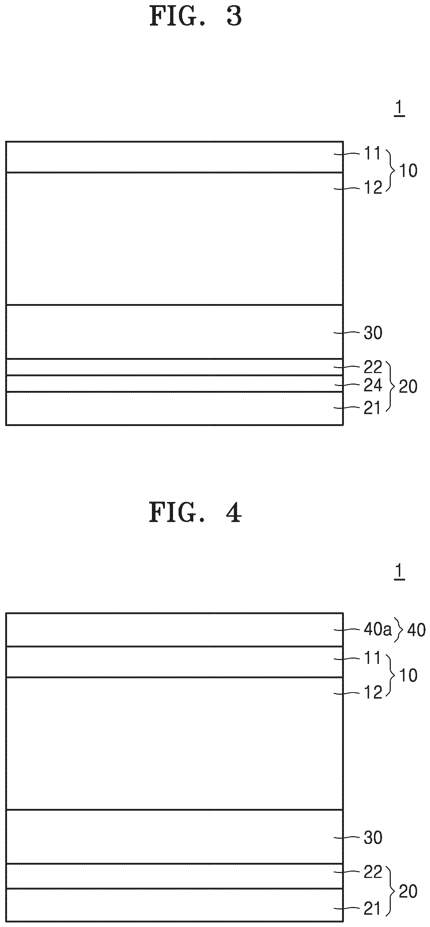

Referring to FIG. 3, in one or more embodiments, the all-solid secondary battery 1 may further include a second anode active material layer 24 which, after charging, is arranged between the anode current collector 21 and the first anode active material layer 22. The second anode active material layer 24 may be a metal layer including lithium or a lithium alloy. The metal layer may include lithium or a lithium alloy. In one or more embodiments, the second anode active material layer 24 may be a metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but embodiments of the present disclosure are not limited to. Any material may be used as long as the material may be used as a lithium alloy in the art. The second anode active material layer 24 may include (e.g., consist of) one of such alloys or lithium or may include (e.g., consist of) one or more suitable types (kinds) of alloys. In one or more embodiments, the second anode active material layer 24 may be, for example, a plated layer. For example, the second anode active material layer 24 may be precipitated between the first anode active material layer 22 and the anode current collector 21 during a charging process of the all-solid secondary battery 1.

A thickness of the second anode active material layer 24 is not limited, but may be, for example, in a range of about 1 µm to about 200 µm, about 1 µm to about 150 µm, about 1 µm to about 100 µm, about 1 µm to about 50 µm, about 1 µm to about 30 µm, about 1 µm to about 22 µm, or about 1 µm to about 10 µm. If (e.g., when) the second anode active material layer 24 is excessively (or substantially) thin, it is difficult for the second anode active material layer 24 to function as a lithium reservoir. If (e.g., when) the second anode active material layer 24 is excessively (or substantially) thick, the mass and volume of the all-solid secondary battery 1 may increase, and the cycle characteristics of the all-solid secondary battery 1 may actually deteriorate.

For example, in one or more embodiments, the thickness of the second anode active material layer 24 may be less than the thickness of the first anode active material layer 22. The thickness of the second anode active material layer 24 may be, for example, 70% or less, 60% or less, 50% or less, 40% or less, or 30% or less of the thickness of the first anode active material layer 22. In one or more embodiments, the thickness of the second anode active material layer 24 may be, for example, in a range of about 1% to about 70%, about 1% to about 60%, about 1% to about 50%, about 1% to about 40%, or about 1% to about 30% of the thickness of the first anode active material layer 22. The thickness of the second anode active material layer 24 may be less than the thickness of the first anode active material layer 22, and thus a change in volume during charging or discharging of the all-solid secondary battery 1 may be suppressed or reduced. In one or more embodiments, deterioration may be suppressed or reduced due to a change in volume of the all-solid secondary battery 1.

In one or more embodiments, in the all-solid secondary battery 1, for example, before assembly of the all-solid secondary battery 1, the second anode active material layer 24 may be arranged between the anode current collector 21 and the first anode active material layer 22. If (e.g., when) the second anode active material layer 24 is arranged between the anode current collector 21 and the first anode active material layer 22 before the assembly of the all-solid secondary battery 1, the second anode active material layer 24 may be a metal layer including lithium and thus may server as a lithium reservoir. For example, in some embodiments, before the assembly of the all-solid secondary battery 1, a lithium foil may be arranged between the anode current collector 21 and the first anode active material layer 22.

If (e.g., when) the second anode active material layer 24 is precipitated by the all-solid secondary battery 1 being charged after being assembled, the all-solid secondary battery 1 may not include (e.g., may exclude) the second anode active material layer 24 during the assembly of the all-solid secondary battery 1, and thus the energy density of the all-solid secondary battery 1 may increase. During charging of the all-solid secondary battery 1, the first anode active material layer 22 may be charged beyond a charge capacity thereof. For example, the first anode active material layer 22 may be overcharged. At the beginning of charging, lithium may be adsorbed in the first anode active material layer 22. The anode active material included in the first anode active material layer 22 may form an alloy or a compound with lithium ions that move/migrate from the cathode layer 10. If (e.g., when) charging is performed beyond a capacity of the first anode active material layer 22, for example, lithium may be precipitated on a rear side of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly composed of (e.g., consisting of) lithium (for example, metallic lithium). Such a result is obtained, for example, because the anode active material included in the first anode active material layer 22 includes a material that forms an alloy or a compound with lithium. During discharging, lithium in the first anode active material layer 22 and the second anode active material layer 24, for example, lithium in the metal layer, may be ionized to move toward the cathode layer 10. In one or more embodiments, in the all-solid secondary battery 1, lithium may be used as an anode active material. In one or more embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In one or more embodiments, a short circuit and a reduction in capacity of the all-solid secondary battery 1 may be suppressed or reduced, thereby improving the cycle characteristics of the all-solid secondary battery 1. In one or more embodiments, if (e.g., when) the second anode active material layer 24 is provided by the all-solid secondary battery 1 being charged after being assembled, the anode layer 20, for example, the anode current collector 21, the first anode active material layer 22, and a region therebetween, may be Li-free regions that do not include lithium (Li) in an initial state of the all-solid secondary battery 1 or in a state after full discharging thereof.

### Anode layer: Anode current collector

The anode current collector 21 may include (e.g., consist of) a material that does not react with lithium, for example, a material that does not form both (e.g., simultaneously) an alloy and a compound with lithium. Examples of a material constituting the anode current collector 21 may include copper (Cu), stainless steel, titanium (Ti), iron (Fe), cobalt (Co), and nickel (Ni), but embodiments of the present disclosure are not necessarily limited thereto. Any material may be used as long as the material may be used as an electrode current collector in the art. The anode current collector 21 may include (e.g., consist of) one type or kind of the above-described metals, an alloy of two or more types (kinds) of the aforementioned metals, or a coating material. The anode current collector 21 may be, for example, in the form of a plate or a foil.

Referring to FIG. 2, in one or more embodiments, the all-solid secondary battery 1 may further include a thin film 23, which includes an element capable of forming an alloy with lithium, on a (e.g., one) side (or surface) of the anode current collector 21. The thin film 23 may be arranged between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but embodiments of the present disclosure are not necessarily limited thereto. Any material may be used as long as the material may form an alloy with lithium in the art. The thin film 23 may include (e.g., consist of) one of such metals or an alloy of one or more suitable types (kinds) of such metals. The thin film 23 may be arranged on a (e.g., one) side (or surface) of the anode current collector 21 so that, for example, a precipitated form of the second anode active material layer 24 precipitated between the thin film 23 and the first anode active material layer 22 may be further planarized, and the cycle characteristics of the all-solid secondary battery 1 may be further improved.

A thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to function. If (e.g., when) the film 23 is excessively (or substantially) thick, the thin film 23 itself may adsorb lithium, and thus an amount of lithium precipitated in the anode layer 20 may decrease, resulting in a decrease in energy density of the all-solid secondary battery 1 and a deterioration in cycle characteristics of the all-solid secondary battery 1. The thin film 23 may be arranged on the anode current collector 21 through, for example, vacuum deposition, sputtering, plating, and/or the like, but embodiments of the present disclosure are not necessarily limited to such a method. Any method capable of forming the thin film 23 in the art may be used.

In one or more embodiments, the anode current collector 21 may include, for example, a base film and a metal layer arranged on a side (or surface) (e.g., one side (or surface) or two opposite sides (or surfaces)) of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), and/or a (e.g., any suitable) combination thereof. The polymer may be an insulating polymer. In one or more embodiments, the base film may include an insulating thermoplastic polymer, and thus, if (e.g., when) a short circuit occurs, the base film may soften or liquefy to interrupt the operation of a battery, thereby suppressing or reducing a rapid increase in current. The metal layer may include, for example, copper (Cu), stainless steel, titanium (Ti), iron (Fe), cobalt (Co), nickel (Ni), or an alloy thereof. In one or more embodiments, the anode current collector 21 may additionally include a metal chip and/or a lead tab. The base film, the metal layer, the metal chip, and the lead tab of the anode current collector 21 may be further refer to the cathode current collector 11 described later. The anode current collector 21 may have such a structure, and thus a weight of the anode layer 20 may be reduced, thereby improving the energy density of the anode layer 20 and the all-solid secondary battery 1.

### Anode layer: First inactive member

Referring to FIGS. 4 and 5 and 8 to 12, in one or more embodiments, the all-solid secondary battery 1 may further include a first inactive member 40 (40a and/or 40b) arranged on at least one of the other side (i.e., side facing away the anode active material layer 22) of the anode current collector 21 or the other surface (i.e., side facing away the cathode active material layer 12) of the cathode current collector 11.

In one or more embodiments, the first inactive member 40 (40a and/or 40b) may not include (e.g., may exclude) an electrode active material. The first inactive member 40 (40a and/or 40b) may be, for example, an insulating member.

In one or more embodiments, the first inactive member 40 (40a and/or 40b) may additionally include a conductive material (e.g., electron conductor) to have conductivity. In one or more embodiments, the first inactive member 40 (40a and/or 40b) may additionally include a flame-retardant material and thus may be, for example, a flame-retardant inactive member.

In one or more embodiments, the first inactive member 40 (40a and/or 40b) may be, for example, an elastic member. The first inactive member 40 (40a and/or 40b) may be, for example, a porous elastic member. In one or more embodiments, the first inactive member 40 (40a and/or 40b) may be, for example, an elastic member having at least one of porosity, conductivity, or flame retardancy.

The first inactive member 40 (40a and/or 40b) may impart a buffering function to the all-solid secondary battery 1. The first inactive member 40 (40a and/or 40b) may provide, for example, stress relaxation and restoring forces. The first inactive member 40 (40a and/or 40b) may effectively accommodate a change in volume of the all-solid secondary battery 1 and may apply a certain pressure to the all-solid secondary battery 1.

For example, in one or more embodiments, the first inactive member 40 (40a and/or 40b) may have a lower elastic modulus than the anode current collector 21. The first inactive member 40 (40a and/or 40b) may have a lower elastic modulus than the anode current collector 21, and thus a change in volume of the anode layer 20 may be more effectively accommodated during charging/discharging of the all-solid secondary battery 1. The first inactive member 40 may effectively relieve internal stress caused by a change in volume of the all-solid secondary battery 1 during charging/discharging of the all-solid secondary battery 1, thereby improving the cycle characteristics of the all-solid secondary battery 1.

In one or more embodiments, the first inactive member 40 (40a and/or 40b) may be arranged, for example, on the anode layer 20 of the all-solid secondary battery 1. If (e.g., when) a change in volume of the anode layer 20 is relatively greater as compared with the cathode layer 10 and the solid electrolyte layer 30 during charging or discharging of the all-solid secondary battery 1, the first inactive member 40 (40a and/or 40b) may be arranged adjacent to the anode layer 20, thereby more effectively accommodating the change in volume of the anode layer 20. In one or more embodiments, the first inactive member 40 (40a and/or 40b) may apply a certain pressure to the anode layer 20 to induce, for example, substantially uniform precipitation of lithium metal in the anode layer 20. In one or more embodiments, defects may be more effectively prevented or reduced from being generated in the all-solid secondary battery 1 due to non-substantially uniform precipitation of lithium metal.

In one or more embodiments, the first inactive member 40 (40a and/or 40b) may be arranged, for example, on the cathode layer 10 of the all-solid secondary battery 1. The first inactive member 40 (40a and/or 40b) may be arranged adjacent to the cathode layer 10, thereby more effectively accommodating a change in volume of the all-solid secondary battery 1. In one or more embodiments, the first inactive member 40 (40a and/or 40b) may apply a certain pressure to the all-solid secondary battery 1 to induce, for example, substantially uniform precipitation of lithium metal in the anode layer 20. In one or more embodiments, defects may be more effectively prevented or reduced from being generated in the all-solid secondary battery 1 due to non-substantially uniform precipitation of lithium metal.

In one or more embodiments, the first inactive member 40 (40a and/or 40b) may include a polymer material, a rubber material, and/or a (e.g., any suitable) combination thereof. The first inactive member 40 (40a or 40b) may include the polymer material, the rubber material, or the combination thereof and thus may have stress relaxation and restoring forces. The polymer material may include, for example, a polyurethane-based polymer, a polyacrylic polymer, a polystyrene-based polymer, a polyester-based polymer, a polyamide-based polymer, a polyolefin-based polymer, and/or a (e.g., any suitable) combination thereof. In some embodiments, the polymer material may be, for example, a polymer resin. In some embodiments, the polymeric material may be, for example, an adhesive resin. The rubber material may include, for example, a natural rubber (NR), a butadiene rubber (BR), a nitrile rubber, a silicone rubber, an isoprene rubber (IR), a styrene-butadiene rubber (SBR), an isoprene-butadiene rubber, a styrene-isoprene-butadiene rubber, an acrylonitrile-butadiene rubber (NBR), an ethylene-propylene-diene rubber, a halogenated butyl rubber, chloroprene (CR), a halogenated isoprene rubber, a halogenated isobutylene copolymer, a chloroprene rubber, a butyl rubber (IIR), a halogenated isobutylene-p-methylstyrene rubber, and/or a (e.g., any suitable) combination thereof. The polyurethane-based polymer may include, for example, polyester-based polyurethane, polyether-based polyurethane, and/or a (e.g., any suitable) combination thereof. The polyacrylic polymer may include, for example, polyacrylate, methyl polyacrylate, polymethacrylate, polymethylmethacrylate, and/or a (e.g., any suitable) combination thereof. The polystyrene-based polymer may include, for example, a styrene-ethylene-butylene (SEB) copolymer, a styrene-butadiene-styrene (SBS) copolymer, a hydrogenated product of SBS (styrene-ethylene-butylene-styrene (SEBS) copolymer), a styrene-isoprene-styrene (SIS) copolymer, a hydrogenated product of SIS (styrene-ethylene-propylene-styrene (SEPS) copolymer), a styrene-isobutylene-styrene (SIBS) copolymer, a styrene-butadiene-styrene-butadiene (SBSB) copolymer, a styrene-butadiene-styrene-butadiene-styrene (SBSBS) copolymer, polystyrene (PS), an acrylonitrile styrene (AS) copolymer, an acrylonitrile butadiene styrene (ABS) copolymer, and/or a (e.g., any suitable) combination thereof. The polyester-based polymer may include, for example, polyethylene terephthalate (PET), polybutylene terephthalate (PBT), and/or a (e.g., any suitable) combination thereof. The polyamide-based polymer may include, for example, polyamide 6, polyamide 11, polyamide 12, polyamide 66, polyamide 610, and/or a (e.g., any suitable) combination thereof. The polyolefin-based polymer may include, for example, polyethylene (PE), polypropylene (PP), an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, a 1-butene-4-methyl-pentene copolymer, an ethylene methacrylic acid copolymer, an ethylene ethyl methacrylate copolymer, an ethylene butyl methacrylate copolymer, an ethylene-methyl acrylate copolymer, an ethylene-ethyl acrylate copolymer, an ethylene-butylacrylate copolymer, a propylene-methacrylate copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butylacrylate copolymer, an ethylene-vinyl acetate copolymer (EVA), polyolefin of a propylene vinyl acetate copolymer, and/or a (e.g., any suitable) combination thereof.

In one or more embodiments, the first inactive member 40 (40a and/or 40b) may include, for example, a porous foam, a porous sponge, and/or a (e.g., any suitable) combination thereof. The first inactive member 40 (40a and/or 40b) may include, for example, a porous foam sheet, a porous sponge sheet, and/or a (e.g., any suitable) combination thereof. The first inactive member 40 (40a and/or 40b) may have such a form and thus may provide porosity and a buffering function at the same time. The porous foam may include, for example, a closed cell, an open cell, and/or a (e.g., any suitable) combination thereof. The porous sponge may include, for example, a closed cell, an open cell, and/or a (e.g., any suitable) combination thereof. The closed cell may be, for example, a closed pore and may refer to a cell or pore that is not connected to the surrounding atmosphere. The open cell may be an open pore and may refer to a cell or pore that is connected to the surrounding atmosphere. The first inactive member 40 (40a or 40b) may include, for example, a closed cell porous foam, an open cell porous foam, a closed cell porous sponge, an open cell porous sponge, and/or a (e.g., any suitable) combination thereof. The porous foam may, for example, include both (e.g., simultaneously) a closed cell and an open cell. The porous sponge may, for example, include both (e.g., simultaneously) a closed cell and an open cell.

In one or more embodiments, the first inactive member 40 (40a and/or 40b) may include, for example, a conductive material (e.g., electron conductor). Non-limiting examples of the conductive material may include graphite, CB, AB, KB, Denka black, carbon fiber, CNTs, graphene, metal fiber, a metal powder, and/or the like. A content (e.g., amount) of the conductive material included in the first inactive member 40 (40a and/or 40b) may be, for example, in a range of about 1 part by weight to about 30 parts by weight, about 1 part by weight to about 20 parts by weight, about 1 part by weight to about 15 parts by weight, about 5 parts by weight to about 40 parts by weight, about 5 parts by weight to about 30 parts by weight, or about 5 parts by weight to about 35 parts by weight with respect to 100 parts by weight of the first inactive member 40 (40a and/or 40b). The first inactive member 40 may have conductivity and thus may serve as the anode current collector 21.

in one or more embodiments, the first inactive member 40 (40a and/or 40b) may include, for example, a matrix and a filler. In one or more embodiments, the matrix may include, for example, a substrate and a reinforcing material. In some embodiments, the matrix may include, for example, a fibrous substrate and a fibrous reinforcing material. The matrix may include the fibrous substrate to have elasticity. The fibrous substrate may include, for example, at least one selected from among pulp fibers, insulating polymer fibers, and ion-conductive polymer fibers. The matrix may include the reinforcing material, and thus the strength of the matrix may be improved. The fibrous reinforcing material may include, for example, a glass fiber, a metal oxide fiber, and/or a ceramic fiber. In some embodiments, the fibrous reinforcing material may be, for example, a flame-retardant material. In one or more embodiments, the filler may include, for example, a moisture getter and/or a flame retardant. The filler may include, for example, a metal hydroxide having moisture adsorption properties. The metal hydroxide included in the filler may be, for example, Mg(OH)₂, Fe(OH)₃, Sb(OH)₃, Sn(OH)₄, Tl(OH)₃, Zr(OH)₄, Al(OH)₃ and/or a (e.g., any suitable) combination thereof.

In one or more embodiments, the first inactive member 40 (40a and/or 40b) may be, for example, thicker than the first anode active material layer 22. The first inactive member 40 (40a and/or 40b) may be thicker than the first anode active material layer 22 and thus may more effectively accommodate a change in volume of the anode layer 20 during charging or discharging. The thickness of the first anode active material layer 22 may be 50% or less, 40% or less, 30% or less, 20% or less, or 10% or less of a thickness of the first inactive member 40 (40a and/or 40b). In one or more embodiments, the thickness of the first anode active material layer 22 may be, for example, in a range of about 1% to about 50%, about 1% to about 40%, about 1% to about 30%, about 1% to about 20%, or about 1% to about 10% of the thickness of the first inactive member 40 (40a and/or 40b). In one or more embodiments, the thickness of the first inactive member 40 (40a and/or 40b) may be, for example, in a range of about 10 µm to about 300 µm, about 20 µm to about 300 µm, about 50 µm to about 300 µm, or about 100 µm to about 200 µm. If (e.g., when) the first inactive member 40 (40a and/or 40b) is excessively (or substantially) thin, it may be difficult to provide an intended effect, and if (e.g., when) the first inactive member 40 (40a and/or 40b) is excessively (or substantially) thick, the energy density of the all-solid secondary battery 1 may decrease. A form of the first inactive member 40 (40a and/or 40b) is not limited and may be selected according to a form of the all-solid secondary battery 1. The first inactive member 40 (40a and/or 40b) may be, for example, in the form of a sheet, a rod, or a gasket. For example, in some embodiments, the first inactive member 40 (40a and/or 40b) may not be provided.

### Cathode layer

### Cathode layer: Cathode active material

Referring to FIGS. 1 to 12, the cathode active material layer 12 may include, for example, a cathode active material.

The cathode active material included in the cathode active material layer 12 may be a cathode active material that may reversibly absorb and desorb lithium ions. The cathode active material may include, for example, an oxide-based cathode active material (e.g., in a form of particles), a sulfide-based cathode active material (e.g., in a form of particles), and/or a (e.g., any suitable) combination thereof.

The oxide-based cathode active material may include, for example, a lithium transition metal oxide, a metal oxide, and/or a (e.g., any suitable) combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, and/or a (e.g., any suitable) combination thereof. The metal oxide may include, for example, an iron oxide, a vanadium oxide, and/or a (e.g., any suitable) combination thereof.

The sulfide-based cathode active material may include, for example, nickel sulfide, copper sulfide, Li₂S, a Li₂S-containing composite, and/or a (e.g., any suitable) combination thereof.

In one or more embodiments, the oxide-based cathode active material may include, for example, at least one composite oxide of lithium and a metal selected from among cobalt, manganese, nickel, and/or a (e.g., any suitable) combination thereof. A lithium-containing oxide-based cathode active material may include, for example, a compound represented by at least one selected from among formulas: LiₐA_{1-b}B'_{b}D_{2,} wherein 0.90≤a≤1 and 0≤b≤0.5; LiₐE_{1-b}B'_{b}O_{2-c}D_{c}, wherein 0.90≤a≤1, 0≤b≤0.5, and 0≤c≤0.0; LiE_{2-b}B'_{b}O_{4-c}D_{c}, wherein 0≤b≤0.5 and 0≤c≤0.05; LiₐNi_{1-b-c}Co_{b}B'_{c}D_{α}, wherein 0.90≤a≤1, 0≤b≤0.5, 0≤c≤0.05, and 0<α≤2; LiₐNi_{1-b-c}Co_{b}B'_{c}O_{2-α}F'_{α}, wherein 0.90≤a≤1, 0≤b≤0.5, 0≤c≤0.05, and 0<α<2; LiₐNi_{1-b-c}Mn_{b}B'_{c}D_{α}, wherein 0.90≤a≤1, 0≤b≤0.5, 0≤c≤0.05, and 0<α≤2; LiₐNi_{1-b-c}Mn_{b}B'_{c}O_{2-α}F'_{α}, wherein 0.90≤a≤ 1, 0≤b≤0.5, 0≤c≤0.05, and 0<α<2; LiₐNi_{b}E_{c}G_{d}O₂, wherein 0.90≤a≤1, 0≤b≤0.9, 0≤c≤0.5, and 0.001≤d≤0.1; LiₐNi_{b}Co_{c}Mn_{d}GₑO₂, wherein 0.90≤a≤1, 0≤b≤0.9, 0≤c≤0.5, 0≤d≤0.5, and 0.001≤e≤0.1; LiₐNiG_{b}O₂, wherein 0.90≤a≤1 and 0.001≤b≤0.1; LiₐCoG_{b}O₂, wherein 0.90≤a≤1 and 0.001≤b≤0.1; LiₐMnG_{b}O₂, wherein 0.90≤a≤1 and 0.001≤b≤0.1; LiₐMn₂G_{b}O₄, wherein 0.90≤a≤1 and 0.001≤b≤0.1; LiV₂O₅; LiI'O₂; LiNiVO₄; Li_{(3-f)}J₂(PO₄)₃, wherein 0≤f≤2; Li_{(3-f)}Fe₂(PO₄)₃, wherein 0≤f≤2; and LiFePO₄.

In the formulas representing the above-described compounds, A may be nickel (Ni), cobalt (Co), manganese (Mn), and/or a (e.g., any suitable) combination thereof, B' may be Al, Ni, Co, Mn, chromium (Cr), iron (Fe), magnesium (Mg), strontium (Sr), vanadium (V), a rare earth element, and/or a (e.g., any suitable) combination thereof, D may be oxygen (O), fluorine (F), sulfur (S), phosphorus (P), and/or a (e.g., any suitable) combination thereof, E may be Co, Mn, and/or a (e.g., any suitable) combination thereof, F' may be F, S, P, and/or a (e.g., any suitable) combination thereof, G may be Al, Cr, Mn, Fe, Mg, lanthanum (La), cerium (Ce), Sr, V, and/or a (e.g., any suitable) combination thereof, Q may be Ti, Mo, Mn, and/or a (e.g., any suitable) combination thereof, I' may be Cr, V, Fe, scandium (Sc), yttrium (Y), and/or a (e.g., any suitable) combination thereof, and J may be V, Cr, Mn, Co, Ni, Cu, and/or a (e.g., any suitable) combination thereof. In one or more embodiments, a compound in which a coating layer is added to a surface of the above compound may also be used, and/or a (e.g., any suitable) mixture of two or more of the above compounds and a compound in which a coating layer is added thereto may also be used. The coating layer added to the surface of the above compound may include, for example, a coating element compound of an oxide or a hydroxide of a coating element, an oxyhydroxide of a coating element, an oxycarbonate of a coating element, and/or a hydroxycarbonate of a coating element. A compound constituting the coating layer may be amorphous or crystalline. The coating element included in the coating layer may include Mg, Al, Co, potassium (K), sodium (Na), calcium (Ca), silicon (Si), Ti, V, Sn, germanium (Ge), gallium (Ga), boron (B), arsenic (As), zirconium (Zr), and/or a (e.g., any suitable) mixture thereof. A method of forming the coating layer may be selected within methods that do not adversely affect the physical properties of the cathode active material. For example, a coating method may include spray coating, dipping, and/or the like. These coating methods may be well understood by those skilled in the art, and thus a detailed description thereof will not be provided.

In one or more embodiments, the oxide-based cathode active material may include, for example, one or more selected from among lithium transition metal oxides represented by Formulas 1 to 8:

**Formula 1** **LiₐNiₓCo_{y}M_{z}O_{2-b}A_{b}**

in Formula 1, 1.0≤a≤1.2, 0≤b≤0.2, 0.8≤x<1, 0≤y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a (e.g., any suitable) combination thereof, and A may be F, S, Cl, Br, or a (e.g., any suitable) combination thereof,

**Formula 2** **LiNiₓCo_{y}Mn_{z}O₂**

**Formula 3** **LiNiₓCo_{y}Al_{z}O₂**

in Formula 2 and Formula 3, 0.8≤x≤0.95, 0≤y≤0.2, 0<z≤0.2, and x+y+z=1,

**Formula 4** **LiNiₓCo_{y}Mn_{z}Al_{w}O₂**

in Formula 4, 0.8≤x≤0.95, 0≤y≤0.2, 0<z≤0.2, 0<w≤0.2, and x+y+z+w=1,

**Formula 5** **LiₐCoₓM_{y}O_{2-b}A_{b}**

in Formula 5,
1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a (e.g., any suitable) combination thereof, and A may be F, S, Cl, Br, or a (e.g., any suitable) combination thereof,

**Formula 6** **LiₐNiₓMn_{y}M'_{z}O_{2-b}A_{b}**

in Formula 6,
1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a (e.g., any suitable) combination thereof, and A may be F, S, Cl, Br, or a (e.g., any suitable) combination thereof,

**Formula 7** **LiₐM1ₓM2_{y}PO_{4-b}X_{b}**

in Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or a (e.g., any suitable) combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a (e.g., any suitable) combination thereof, and X may be O, F, S, P, or a (e.g., any suitable) combination thereof, and

**Formula 8** **LiₐM3_{z}PO₄**

in Formula 8, 0.90≤a≤1.1, 0.9≤z≤1.1, and M3 may be chromium (Cr), manganese (Mn), iron (Fe), cobalt (Co), nickel (Ni), copper (Cu), zirconium (Zr), or a (e.g., any suitable) combination thereof.

In one or more embodiments, the oxide-based cathode active material may be covered with a coating layer. As the coating layer, any coating layer may be used as long as the coating layer may be suitable as a coating layer for a cathode active material of an all-solid secondary battery. In one or more embodiments, the coating layer may include, for example, Li₂O-ZrO₂ (LZO).

A size of the oxide-based cathode active material may be, for example, in a range of about 0.1 µm to about 30 µm, about 0.5 µm to about 20 µm, or about 1 µm to about 15 µm. The oxide-based cathode active material may include, for example, single crystal particles or polycrystal particles.

The sulfide-based cathode active material may include, for example, a Li₂S-containing composite. The Li₂S-containing composite may include, for example, a composite of Li₂S and a conductive material, a composite of Li₂S, a solid electrolyte, and a conductive material, a composite of Li₂S and a solid electrolyte, a composite of Li₂S and a lithium salt, a composite of Li₂S, a lithium salt, and a conductive material, a composite of Li₂S and a metal carbide, a composite of Li₂S, a metal carbide, and a conductive material, a composite of Li₂S and a metal nitride, a composite of Li₂S, a metal nitride, and a conductive material, and/or a (e.g., any suitable) combination thereof. The Li₂S-containing composite may be distinguished from a simple mixture of Li₂S, a conductive material, a solid electrolyte, a lithium salt, a metal carbide, and/or a metal nitride. The simple mixture of Li₂S, the conductive material, the solid electrolyte, the lithium salt, the metal carbide, and/or the metal nitride may provide high interfacial resistance because a dense interface between Li₂S and these other components may not be maintained, and thus the lifespan characteristics of an all-solid secondary battery may deteriorate.

The Li₂S-containing composite may include Li₂S. Li₂S may have a high theoretical capacity, and thus a secondary battery having a high energy density may be provided. However, in order to overcome the shortcomings such as low ionic conductivity and/or electronic conductivity, Li₂S may form a composite with a lithium salt, a metal halide, a conductive material, and/or the like. A content (e.g., amount) of Li₂S in the Li₂S-containing composite may be, for example, in a range of about 10 wt% to about 80 wt%, about 20 wt% to about 80 wt%, about 30 wt% to about 80 wt%, or about 40 wt% to about 80 wt% with respect to the total weight of 100 wt% of the Li₂S-containing composite. If (e.g., when) the content (e.g., amount) of Li₂S in the Li₂S-containing composite excessively (or substantially) increases, it may not be easy to improve the ionic conductivity and/or electronic conductivity of the Li₂S-containing composite. If (e.g., when) the content (e.g., amount) of Li₂S in the Li₂S-containing composite is excessively (or substantially) low, the energy density of an all-solid secondary battery may decrease.

The composite of Li₂S and a conductive material may include a conductive material, in addition to Li₂S. The conductive material may include, for example, a carbon-based material. As the carbon-based material, for example, any material may be used as long as the material may be a material including carbon atoms and may be used as a conductive material (e.g., electron conductor) in the art. The carbon-based material may be, for example, a crystalline carbon-based material, an amorphous carbon-based material, or a (e.g., any suitable) combination thereof. The carbon-based material may be, for example, a sintered material of a carbon precursor. In one or more embodiments, the carbon-based material may include, for example, carbon nanostructures. The carbon nanostructures may include, for example, one-dimensional carbon nanostructures, two-dimensional carbon nanostructures, three-dimensional carbon nanostructures, and/or a (e.g., any suitable) combination thereof. The carbon nanostructures may include, for example, CNTs, CNFs, carbon nanobelts, carbon nanorods, graphene, graphene oxide (GO), reduced graphene oxide (rGO), graphene balls (GBs), and/or a (e.g., any suitable) combination thereof. In one or more embodiments, the carbon-based material may be, for example, a porous carbon-based material or a non-porous carbon-based material. The porous carbon-based material may include, for example, periodic and regular two-dimensional or three-dimensional pores. The porous carbon-based material may include, for example, CB such as KB, AB, Denka black, thermal black, and/or channel black; graphite; activated carbon; and/or a (e.g., any suitable) combination thereof. The form of the carbon-based material may be, for example, a particle form (e.g., in a form of particles), a sheet form (e.g., in a form of sheets), a fibrous form (e.g., in a form of fibers), and/or the like, but embodiments of the present disclosure are not limited thereto. Any material may be used as long as the material may be used as a carbon-based material in the art. A method of preparing the composite of Li₂S and the carbon-based material may be a dry method, a wet method, or a (e.g., any suitable) combination thereof, but embodiments of the present disclosure are limited thereto. The method of preparing the composite of Li₂S and the carbon-based material may include, for example, milling, heat treatment, deposition, and/or the like, but embodiments of the present disclosure are not necessarily limited thereto. Any method may be used as long as the method may be used.

The composite of Li₂S, a solid electrolyte, and a conductive material may include a conductive material and a solid electrolyte, in addition to Li₂S. The conductive material may include, for example, a carbon-based material. The carbon-based material may be defined as for the above-described carbon-based material used in the composite of Li₂S and a conductive-material. The solid electrolyte may be, for example, an amorphous solid electrolyte, and any material may be used as long as the material may be used as an ion-conductive material in the art. In one or more embodiments, the solid electrolyte may be, for example, an inorganic solid electrolyte. In one or more embodiments, the solid electrolyte may be, for example, a crystalline solid electrolyte, an amorphous solid electrolyte, and/or a (e.g., any suitable) combination thereof. In one or more embodiments, the solid electrolyte may be, for example, a sulfide-based solid electrolyte, an oxide-based solid electrolyte, and/or a (e.g., any suitable) combination thereof. The sulfide-based solid electrolyte may include, for example, Li, S, and P and may optionally further include a halogen element. The sulfide-based solid electrolyte may be selected from among sulfide-based solid electrolytes used in a solid electrolyte layer. For example, the sulfide-based solid electrolyte may have an ionic conductivity of 1×10⁻⁵ S/cm or more at room temperature. The sulfide-based solid electrolyte may include, for example, at least one selected from among Li₃PO₄-Li₂SO₄, Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z may be one selected from among Ge, Zn, and Ga, Li₂S-GeS₂, Li₂S-SiS₂-Li₃PO₄, Li₂S-SiS₂-LiₚMO_{q}, wherein p and q are each a positive number and M may be one selected from among P, Si, Ge, B, Al, Ga, and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The oxide-based solid electrolyte may include, for example, Li, O, and a transition metal element and may optionally further include other elements. For example, the oxide-based solid electrolyte may be a solid electrolyte having an ionic conductivity of 1×10⁻⁵ S/cm or more at room temperature. The oxide-based solid electrolyte may be selected from among oxide-based solid electrolytes used in a solid electrolyte layer. In one or more embodiments, the solid electrolyte may include, for example, a mixture of a sulfide-based solid electrolyte and a lithium salt. For example, in one or more embodiments, the solid electrolyte may include a mixture of Li₃PO₄-Li₂SO₄ and a binary lithium salt and/or a mixture of Li₃PO₄-Li₂SO₄ and a ternary lithium salt.

The composite of Li₂S and a solid electrolyte may include a solid electrolyte, in addition to Li₂S. The solid electrolyte may be defined as for the above-described solid electrolyte used in the composite of Li₂S, a conductive material, and a solid electrolyte.

The composite of Li₂S, a lithium salt, and a conductive material may include Li₂S, a lithium salt, and a conductive material. The conductive material may include, for example, a carbon-based material. The carbon-based material may be defined as for the above-described composite of Li₂S and a conductive material. The lithium salt may include, for example, a lithium salt compound. The lithium salt compound may not include (e.g., may exclude), for example, a sulfur (S) atom. The lithium salt compound may be, for example, a binary compound or a ternary compound. in one or more embodiments, the lithium salt compound may be, for example, a binary compound including lithium and one type or kind of element selected from among Groups 13 to 17 of the periodic table of elements. The binary compound may include, for example, at least one selected from among LiF, LiCI, LiBr, Lil, LiH, Li₂S, Li₂O, Li₂Se, Li₂Te, Li₃N, LisP, Li₃As, Li₃Sb, LiI₃, and LiBs. In one or more embodiments, the lithium salt compound may be, for example, a ternary compound including lithium and two types (kinds) of elements selected from among Groups 13 to 17 of the periodic table of elements. The ternary compound may include, for example, at least one selected LisOCI, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. In some embodiments, the lithium salt compound may include at least one lithium halide compound selected from among LiF, LiCI, LiBr, and Lil. The composite of Li₂S, the lithium salt, and the conductive material may be, for example, a composite of Li₂S, a lithium halide, and a carbon-based material. The composite of Li₂S, the lithium salt, and the carbon-based material may include a lithium halide and thus may provide further improved ionic conductivity. The composite of Li₂S, the lithium salt, and the carbon-based material may be distinguished from a simple mixture of Li₂S, a lithium salt, and a carbon-based material. The simple mixture of Li₂S, the lithium salt, and the carbon-based material may provide high interfacial resistance because a dense interface between Li₂S, the lithium salt, and the carbon-based material may not be maintained, and thus the lifespan characteristics of an all-solid secondary battery may deteriorate.

The composite of Li₂S and a lithium salt may include Li₂S and a lithium salt. The lithium salt may be defined as for the above-described lithium salt used in the composite of Li₂S, a lithium salt, and a conductive material.

The composite of Li₂S and a metal carbide may include a metal carbide, in addition to Li₂S. The metal carbide may be, for example, a two-dimensional metal carbide. The two-dimensional metal carbide may be, for example, Mxene. The two-dimensional metal carbide may be represented, for example, by Mₙ₊₁CₙTₓ, wherein M may be a transition metal, T may be an end group, T may be O, OH, and/or F, n=1, 2, or 3, and x is the number of end groups. The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a (e.g., any suitable) combination thereof. A surface of the two-dimensional metal carbide may be terminated with O, OH, and/or F.

The composite of Li₂S, a metal carbide, and a conductive material may include Li₂S, a metal carbide, and a conductive material. The conductive material may include, for example, a carbon-based material. The carbon-based material may be defined as for the above-described carbon-based material used in the composite of Li₂S and a conductive-material. The metal carbide may be defined as for the above-described the metal carbide used in the composite of Li₂S and a metal carbide.

The composite of Li₂S and the metal nitride may include Li₂S and a metal nitride. The metal nitride may be, for example, a two-dimensional metal nitride. The two-dimensional metal nitride may be represented, for example, by Mₙ₊₁NₙTₓ, wherein M may be a transition metal, T may be an end group, T may be O, OH, and/or F, n=1, 2, or 3, and x is the number of end groups. A surface of the two-dimensional metal nitride may be terminated with O, OH, and/or F.

The composite of Li₂S, a metal nitride, and a conductive material may include Li₂S, a metal nitride, and a conductive material. The conductive material may include, for example, a carbon-based material. The carbon-based material may be defined as for the above-described carbon-based material used in the composite of Li₂S and a conductive-material. The metal nitride may be defined as for the above-described the metal nitride used in the composite of Li₂S and a metal nitride.

In one or more embodiments, the Li₂S-containing composite may include, for example, a composite of Li₂S and a lithium salt (LiₐX1_{b}, wherein X1 may be I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCl, NCl₂, BN₂, and/or a (e.g., any suitable) combination thereof, 1≤a≤5, and 1≤b≤5), a composite of Li₂S, a lithium salt (LiₐX1_{b}), and a conductive material (C), a composite of Li₂S and a metal halide (M_{c}X2_{d}, wherein M may be at least one metal selected from among Groups 2 to 15 of the periodic table of elements, X2 may be I, Br, Cl, F, and/or a (e.g., any suitable) combination thereof, 1≤c≤5, and 1≤d≤5)., a composite of Li₂S, a metal halide (M_{c}X2_{d}), and a conductive material (C), a composite of Li₂S, a lithium salt (LiₐX1_{b}), and a metal halide (M_{c}X2_{d}), a composite of Li₂S, a lithium salt (LiₐX1_{b}), a metal halide (M_{c}X2_{d}), and a conductive material (C), and/or a (e.g., any suitable) combination thereof. The Li₂S-containing composite may be distinguished from a simple mixture of Li₂S, a lithium salt, a metal halide, and a conductive material. The simple mixture of Li₂S, the metal halide, the lithium salt, and the conductive material may provide high interfacial resistance because a dense interface between Li₂S and these other components may not be maintained, and thus the lifespan characteristics of an all-solid secondary battery may deteriorate.

The composite of Li₂S and a lithium salt (LiₐX1_{b}) may be represented, for example, by Li₂S-LiₐX1_{b}, wherein 1≤a≤5, 1≤b≤5, and X1 may be I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCl, NCl₂, BN₂, or a (e.g., any suitable) combination thereof.

The composite of Li₂S, a lithium salt (LiₐX1_{b}), and a conductive material (C)) may be represented, for example, by Li₂S-LiₐX1_{b}-C, wherein 1≤a≤5, 1≤b≤5, and X1 may be I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCl, NCl₂, BN₂, and/or a (e.g., any suitable) combination thereof. The conductive material may be, for example, a carbon-based material.

The composite of Li₂S and a metal halide (M_{c}X2_{d}) may be represented, for example, by Li₂S-M_{c}X2_{d}-C, wherein 1≤c≤5, 1≤d≤5, M may be at least one metal selected from among Groups 2 to 15 of the periodic table of elements. and X2 may be I, Br, Cl, F, or a (e.g., any suitable) combination thereof. The conductive material may be, for example, a carbon-based material.

The composite of Li₂S, a metal halide (M_{c}X2_{d}), and a conductive material (C) may be represented, for example, by Li₂S-M_{c}X2_{d}-C, wherein 1≤c≤5, 1≤d≤5, M may be at least one metal selected from among Groups 2 to 15 of the periodic table of elements. and X2 may be I, Br, Cl, F, or a (e.g., any suitable) combination thereof. The conductive material may be, for example, a carbon-based material.

The composite of Li₂S, a lithium salt (LiₐX1_{b}), and a metal halide (MₐX2_{b}) may be represented by Li₂S-LiₐX1_{b}-M_{c}X2_{d}, wherein 1≤a≤5, 1≤b≤5, 1≤c≤5, 1≤d≤5, X1 may be I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCl, NCl₂, BN₂, or a (e.g., any suitable) combination thereof, M may be at least one metal selected from among Groups 2 to 15 of the periodic table of elements, and X2 may be I, Br, Cl, F, or a (e.g., any suitable) combination thereof. The conductive material may be, for example, a carbon-based material.

The composite of Li₂S, a lithium salt (LiₐX1_{b}), a metal halide (MₐX2_{b}), and a conductive material (C) may be represented by Li₂S-LiₐX1_{b}-M_{c}X2_{d}-C, wherein 1≤a≤5, 1≤b≤5, 1≤c≤5, 1≤d≤5, X1 may be I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCl, NCl₂, BN₂, or a (e.g., any suitable) combination thereof, M may be at least one metal selected from among Groups 2 to 15 of the periodic table of elements, and X2 may be I, Br, Cl, F, or a (e.g., any suitable) combination thereof. The conductive material may be, for example, a carbon-based material.

In the aforementioned Li₂S-containing composite, for example, 1≤a≤4, 1≤b≤4, 1≤c≤4, 1≤d≤4, 1≤a≤3, 1≤b≤3, 1≤c≤3, 1≤d≤3, 1≤a≤2, 1≤b≤2, 1≤c≤2, or 1≤d≤2.

In one or more embodiments, the Li₂S-containing composite may include a metal halide, and the metal halide may include at least one metal selected from among Al, Mg, Ti, Sn, As, Sb, Nb, Sc, Zr, V, W, Mn, Fe, Co, Pd, Cu, Ag, Zn, and Se. The metal halide may include such a metal, thereby further improving the cycle characteristics of an all-solid secondary battery including the Li₂S-containing composite.

In one or more embodiments, the Li₂S-containing composite may include a metal halide, and for example, the metal halide may include AlF₃, AlCl₃, AlBr₃, AlI₃, MgF₂, MgCl₂, MgBr₂, MgI₂, TiF₄, TiCl₄, TiBr₄, TiI₄, SnF₄, SnCl₄, SnBr₄, SnI₄, AsF₄, AsCl₄, AsBr₄, AsI₄, SbF₄, SbCl₄, SbBr₄, SbI₄, and/or a (e.g., any suitable) combination thereof. The Li₂S-containing composite may include such a metal halide, thereby further improving the cycle characteristics of an all-solid secondary battery including the Li₂S-containing composite.

In one or more embodiments, the Li₂S-containing composite may include, for example, a solid solution of Li₂S and a lithium salt, a solid solution of Li₂S and a metal halide, a solid solution of Li₂S, a lithium salt, and a metal halide, and/or a (e.g., any suitable) combination thereof. For example, a composite of Li₂S and a lithium salt (LiₐX1_{b}) and/or a composite of Li₂S, a lithium salt (LiₐX1_{b}), and a conductive material (C) may include a solid solution of Li₂S and a lithium salt. For example, a composite of Li₂S and a metal halide (M_{c}X2_{d}) and/or a composite of Li₂S, a metal halide (M_{c}X2_{d}), and a conductive material (C) may include a solid solution of Li₂S and a metal halide. For example, a composite of Li₂S, a lithium salt (LiₐX1_{b}), and a metal halide (MₐX2_{b}) and/or a composite of Li₂S, a lithium salt (LiₐX1_{b}), a metal halide (MₐX2_{b}), and a conductive material (C) may include a solid solution of Li₂S, a lithium salt, and a metal halide.

In one or more embodiments, the Li₂S-containing composite may include the solid solution of Li₂S and a lithium salt, the solid solution of Li₂S and a metal halide, the solid solution of Li₂S, a lithium salt, and a metal halide, or a (e.g., any suitable) combination thereof, and thus the ionic conductivity of the Li₂S-containing composite may increase. For example, the solid solution of Li₂S and the lithium salt, the solid solution of Li₂S and the metal halide, the solid solution of Li₂S, the lithium salt, and the metal halide, or the combination thereof may include lithium ions, metal ions, and/or halide ions arranged inside Li₂S crystallites, and thus the ionic conductivity of the solid solution of Li₂S, the lithium salt, and the metal halide may be improved as compared with that of Li₂S. As a result, the ionic conductivity of the Li₂S -containing composite may be improved, and the internal resistance of the Li₂S-containing composite may be reduced. A lithium-containing sulfide-based cathode active material may include such a Li₂S-containing composite, thereby further improving the cycle characteristics of an all-solid secondary battery including the lithium-containing sulfide-based cathode active material. For example, the high-rate characteristics of an all-solid secondary battery including such a lithium-containing sulfide-based cathode active material may be further improved.

A composite of Li₂S, a lithium salt, and a conductive material, a composite of Li₂S, a metal halide, and a conductive material, and a composite of Li₂S, a lithium salt, a metal halide, and a conductive material may include a conductive material. The conductive material may include, for example, a carbon-based material, a metal-based material, and/or a (e.g., any suitable) combination thereof.

In one or more embodiments, the carbon-based material may include, for example, a fibrous carbon-based material. The metal-based material may include, for example, a fibrous metal-based material.

The composite of Li₂S, a metal halide, and a conductive material may include the fibrous carbon-based material and/or the fibrous metal-based material, thereby further improving the electronic conductivity of the composite of Li₂S, the metal halide, and the conductive material. The composite of Li₂S, the metal halide, and the conductive material may include the fibrous carbon-based material and/or the fibrous metal-based material, and thus electronic conduction may be more easily performed from a surface to the inside of the composite of Li₂S, the metal halide, and the conductive material. The internal resistance of a cathode active material layer including the composite of Li₂S, the metal halide, and the conductive material may be reduced, and the cycle characteristics of an all-solid secondary battery including the cathode active material layer may be further improved.

An aspect ratio of the fibrous carbon-based material and/or the fibrous metal-based material may be, for example, 2 or more, 3 or more, 4 or more, 5 or more, 10 or more, or 20 or more. In one or more embodiments, the aspect ratio of the fibrous carbon-based material and/or the fibrous metal-based material may be, for example, in a range of about 2 to about 30, about 3 to about 30, about 4 to about 30, about 5 to about 30, about 10 to about 30, or about 20 to about 30. In one or more embodiments, the aspect ratio of the fibrous carbon-based material and/or the fibrous metal-based material may be, for example, in a range of about 2 to about 30, about 2 to about 20, about 2 to about 10, about 2 to about 8, about 2 to about 5 or about 2 to about 4. The fibrous carbon-based material and/or the fibrous metal-based material may have an aspect ratio in such a range so that the overall electronic conductivity of the composite of Li₂S, the lithium salt, and the conductive material may be improved, and an imbalance of local electronic conductivity in the composite of Li₂S, the lithium salt, and the conductive material may be further alleviated.

The fibrous carbon-based material may include, for example, carbon nanostructures. The carbon nanostructures may include, for example, CNFs, CNTs, carbon nanobelts, carbon nanorods, and/or a (e.g., any suitable) combination thereof. The fibrous metal-based material may include, for example, metal nanostructures. The metal nanostructures may include, for example, metal nanofibers (MNF), metal nanotubes (MNT), metal nanobelts, metal nanorods, and/or a (e.g., any suitable) combination thereof.

The carbon nanostructure may include, for example, a primary carbon nanostructure including (e.g., consisting of) a single carbon nanostructure, a secondary carbon nanostructure in which a plurality of carbon nanostructures aggregate, and/or a (e.g., any suitable) combination thereof.

A diameter of the primary carbon nanostructure may be, for example, in a range of about 1 nm to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, in a range of 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from an SEM image or a TEM image. In one or more embodiments, the diameter and/or length of the primary carbon nanostructure may be measured through laser diffraction.

The secondary carbon nanostructure may be, for example, a structure formed by primary carbon nanostructures being entirely or partially clustered to constitute a bundle-type or kind or rope-type or kind nanostructure. The secondary carbon nanostructure may include, for example, a bundle-type or kind carbon nanostructure, a rope-type or kind carbon nanostructure, and/or a (e.g., any suitable) combination thereof. A diameter of the secondary carbon nanostructure may be, for example, in a range of about 2 nm to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanotube structure may be, for example, in a range of about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to 100 nm. The diameter and length of the secondary carbon nanostructure may be measured from an SEM image or by an optical microscope. In one or more embodiments, the diameter and/or length of the secondary carbon nanostructure may be measured through laser diffraction. The secondary carbon nanostructure may be dispersed for example, in a solvent and/or the like to be converted into the primary carbon nanostructure and then may be used to prepare the composite of Li₂S, the metal halide, and the conductive material.

According to one or more embodiments, a particle size of a sulfide-based cathode active material, for example, a particle size of the Li₂S-containing composite, may be, for example, 10 µm or less, 8 µm or less, 5 µm or less, 4 µm or less, 2 µm or less, 1.5 µm or less, or 1 µm or less. In one or more embodiments, the particle size of the Li₂S-containing composite may be, for example, in a range of about 1 µm to about 10 µm, about 2 µm to about 10 µm, about 2 µm to about 8 µm, or about 3 µm to about 8 µm. In one or more embodiments, the particle size of the Li₂S-containing composite may be, for example, in a range of about 0.1 µm to about 10 µm, about 0.1 to about 8 µm, about 0.1 µm to about 5 µm, about 0.1 µm to about 4 µm, about 0.1 µm to about 2 µm, about 0.1 µm to about 1.5 µm, or about 0.1 µm to about 1 µm. Particles of the Li₂S-containing composite may have a size in such ranges, a change in volume of the sulfide-based cathode active material during charging or discharging may be suppressed or reduced, and the deterioration of the sulfide-based cathode active material during charging or discharging may be more effectively suppressed or reduced. If (e.g., when) the particle size of the Li₂S-containing composite excessively (or substantially) increases (e.g., size above the ranges), a change in volume of the Li₂S-containing composite during charging or discharging may increase, which may accelerate the deterioration of the sulfide-based cathode active material. As a result, the cycle characteristics of an all-solid secondary battery including such a sulfide-based cathode active material may deteriorate. The particle size of the Li₂S-containing composite may be measured by using, for example, laser diffraction, scanning electron microscopy, and/or the like. The size of the Li₂S-containing composite may be an arithmetic average of particle diameters of a plurality of particles measured, for example, from an SEM image by using software.

According to one or more embodiments, a size of Li₂S particles included in the Li₂S-containing composite may be, for example, 2 µm or less, 1.5 µm or less, or 1 µm or less. In one or more embodiments, the size of the Li₂S particles may be, for example, in a range of about 0.1 µm to about 2 µm, about 0.1 µm to about 1.5 µm, or about 0.1 µm to about 1 µm. The Li₂S particles may have a size in such ranges, and thus a change in volume of the Li₂S-containing composite during charging or discharging may be suppressed or reduced, thereby suppressing or reducing the deterioration of the sulfide-based cathode active material including the Li₂S-containing composite during charging or discharging. If (e.g., when) the size of the Li₂S particles excessively (or substantially) increases (e.g., size above the ranges), a change in volume of the Li₂S-containing composite during charging or discharging may increase, which may accelerate the deterioration of the sulfide-based cathode active material including the Li₂S-containing composite. As a result, the cycle characteristics of a secondary battery including such a sulfide-based cathode active material may deteriorate.

In one or more embodiments, the Li₂S-containing composite may have, for example, an ionic (ion) conductivity of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at a temperature of about 25 °C and a pressure of about 1 atm. Ionic conductivity may be measured by using, for example, an electrochemical impedance spectroscopy, a direct current (DC) polarization method, and/or the like. The Li₂S-containing composite may have an ionic conductivity in such ranges, and thus the internal resistance of a cathode active material layer including the Li₂S-containing composite may be further reduced. The cycle characteristics of an all-solid secondary battery including the cathode active material layer may be improved.

In one or more embodiments, the Li₂S-containing composite may have, for example, an electronic (electron) conductivity of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at a temperature of about 25 °C and a pressure of about 1 atm. Electronic conductivity may be measured by using, for example, an electrochemical impedance spectroscopy, a DC polarization method, and/or the like. The Li₂S-containing composite may have an electronic conductivity in such ranges, and thus the internal resistance of a cathode active material layer including the Li₂S-containing composite may be further reduced. The cycle characteristics of an all-solid secondary battery including the cathode active material layer may be improved. For example, with respect to 100 parts by weight of the composite of Li₂S, the lithium salt, the metal halide, and the conductive material, Li₂S may be included in a content (e.g., amount) of about 40 parts by weight to about 80 parts by weight, a combination of the lithium salt and the metal halide may be included in a content (e.g., amount) of about 1 part by weight to about 40 parts by weight, and the conductive material may be included in a content (e.g., amount) of about 1 part by weight to about 20 parts by weight. The conductive material may be, for example, a carbon-based material. In the combination of the lithium salt and the metal halide, a molar ratio of the lithium salt to the metal halide may be, for example, in a range of about 3:1 to about 1:3, about 2:1 to about 1:2, or about 1.5:1 to about 1:1.5.

A content (e.g., amount) of Li₂S included in the composite of Li₂S, the lithium salt, the metal halide, and the conductive material may be, for example, in a range of about 10 parts by weight to about 80 parts by weight, about 20 parts by weight to about 70 parts by weight, about 30 parts by weight to about 60 parts by weight, or about 40 parts by weight to about 60 parts by weight with respect to 100 parts by weight of the composite of Li₂S, the lithium salt, the metal halide, and the conductive material. The conductive material may be, for example, a carbon-based material.

A content (e.g., amount) of the lithium salt and the metal halide included in the composite of Li₂S, the lithium salt, the metal halide, and the conductive material, for example, a content (e.g., amount) of the combination of the lithium salt and the metal halide, may be in a range of about 10 parts by weight to about 40 parts by weight, about 15 parts by weight to about 40 parts by weight, about 20 parts by weight to about 40 parts by weight, or about 25 parts by weight to about 35 parts by weight with respect to 100 parts by weight of the composite of Li₂S, the lithium salt, the metal halide, and the conductive material. The conductive material may be, for example, a carbon-based material. A molar ratio of the lithium salt to the metal halide may be in a range of about 3:1 to about 1:3.

A content (e.g., amount) of the conductive material included in the composite of Li₂S, the lithium salt, the metal halide, and the conductive material may be, for example, in a range of about 1 part by weight to about 20 parts by weight, about 5 parts by weight to about 20 parts by weight, or about 5 parts by weight to about 15 parts by weight with respect to 100 parts by weight of the composite of Li₂S, the lithium salt, the metal halide, and the conductive material. The conductive material may be, for example, a carbon-based material.

The composite of Li₂S, the lithium salt, the metal halide, and the conductive material may have a composition of Li₂S, the lithium salt, the metal halide, and the conductive material in such a range, and thus a sulfide-based cathode active material including the composite of Li₂S, the lithium salt, the metal halide, and the conductive material may provide better and suitable ionic conductivity and/or electronic conductivity.

In one or more embodiments, a content (e.g., amount) of Li₂S included in the cathode active material layer 12 may be, for example, in a range of about 30 wt% to about 90 wt%, about 35 wt% to about 90 wt%, about 40 wt% to about 90 wt%, about 45 wt% to about 80 wt%, or about 50 wt% to about 70 wt% with respect to a total weight of 100 wt% of the cathode active material layer 12.

In one or more embodiments, the cathode active material layer 12 may further include, for example, a first fibrous sulfide-based solid electrolyte.

In one or more embodiments, the Li₂S-containing composite may further include, for example, a fibrous sulfide-based solid electrolyte. The Li₂S-containing composite may be a composite of Li₂S and a fibrous sulfide-based solid electrolyte or a composite of Li₂S, a fibrous sulfide-based solid electrolyte, and the above-described carbon, solid electrolyte, lithium salt, metal carbide, and/or metal nitride.

The Li₂S-containing composite may include the fibrous sulfide-based solid electrolyte so that the deterioration of a lithium battery may be further suppressed or reduced, and the cycle characteristics of the all-solid lithium battery may be further improved.

In one or more embodiments, a size of the sulfide-based cathode active material may be, for example, in a range of about 0.1 µm to about 50 µm, about 0.5 µm to about 30 µm, about 0.5 µm to about 20 µm, or about 1 µm to about 10 µm. A size of Li₂S may be, for example, in a range of about 1 nm to about 10 µm, about 10 nm to about 5 µm, about 10 nm to about 3 µm, or about 10 nm to about 1 µm. A size of the Li₂S-containing composite may be, for example, in a range of about 0.1 µm to about 50 µm, about 0.5 µm to about 30 µm, about 0.5 µm to about 20 µm, or about 1 µm to about 10 µm.

The cathode active material may have, for example, a particulate shape (e.g., in a shape of particle) such as a spherical shape or an oval shape. A particle diameter of the cathode active material is not limited and may be in a range applicable to a cathode active material of an all-solid secondary battery according to a related art. A content (e.g., amount) of the cathode active material in the cathode layer 10 is also not limited and may be in a range applicable to a cathode layer of an all-solid secondary battery according to a related art. In one or more embodiments, a content (e.g., amount) of the cathode active material included in the cathode active material layer 12 may be, for example, in a range of about 10 wt% to about 99 wt%, about 10 wt% to about 90 wt%, about 10 wt% to about 80 wt%, about 10 wt% to about 70 wt%, or about 10 wt% to about 50 wt% with respect to a total weight of 100 wt% of the cathode active material layer 12. In one or more embodiments, a content (e.g., amount) of the cathode active material included in the cathode active material layer 12 may be, for example, in a range of about 10 wt% to about 99 wt%, about 10 wt% to about 95 wt%, about 10 wt% to about 90 wt%, about 20 wt%, to about 90 wt%, about 30 wt% to about 90 wt%, about 40 wt% to about 90 wt%, or about 50 wt% to about 90 wt% with respect to the total weight of 100 wt% of the cathode active material layer 12.

### Cathode layer: Solid electrolyte

In one or more embodiments, the cathode active material layer 12 may further include, for example, a solid electrolyte. The solid electrolyte may be, for example, a sulfide-based solid electrolyte. The solid electrolyte included in the cathode layer 10 may be the same as or different from the solid electrolyte included in the solid electrolyte layer 30. The solid electrolyte may be as defined in the part of the solid electrolyte layer 30.

A D50 average particle diameter of the solid electrolyte included in the cathode active material layer 12 may be less than a D50 average particle diameter of the solid electrolyte included in the solid electrolyte layer 30. For example, the D50 average particle diameter of the solid electrolyte included in the cathode active material layer 12 may be 90% or less, 80% or less, 70% or less, 60% or less, 50% or less, 40% or less, 30% or less, or 20% or less of the D50 average particle diameter of the solid electrolyte included in the solid electrolyte layer 30. The D50 average particle diameter may be, for example, a median particle diameter (D50). The median particle diameter (D50) may be a particle size corresponding to a 50% cumulative volume if (e.g., when) a particle size distribution measured through a laser diffraction method is calculated from particles having a smaller particle size to particles having a larger particle size.

A content (e.g., amount) of the solid electrolyte included in the cathode active material layer 12 may be, for example, in a range of about 1 wt% to about 40 wt%, about 1 wt% to about 30 wt%, about 1 wt% to about 20 wt%, or about 1 wt% to about 10 wt% of the total weight of 100 wt% of the cathode active material layer 12.

### Cathode layer: Conductive material

In one or more embodiments, the cathode active material layer 12 may further include a conductive material (e.g., electron conductor). The conductive material may be, for example, a carbon-based conductive material, a metal-based conductive material, and/or a (e.g., any suitable) combination thereof. The carbon-based conductive material may be, for example, graphite, CB, AB, KB, a carbon fiber, and/or a (e.g., any suitable) combination thereof, but embodiments of the present disclosure are not limited thereto. Any material may be used as long as the material may be used as a carbon-based conductive material in the art. The metal-based conductive material may be a metal powder, a metal fiber, and/or a (e.g., any suitable) combination thereof, but embodiments of the present disclosure are not limited thereto. Any material may be used as long as the material may be used as a metal-based conductive material in the art. A content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of 100 wt% of the cathode active material layer 12.

### Cathode layer: Binder

In one or more embodiments, the cathode active material layer 12 may further include a binder. The binder may include, for example, SBR, PTFE, PVDF, PE, and/or the like, but embodiments of the present disclosure are not limited thereto. Any material may be used as long as the material may be used as a binder in the art. A content (e.g., amount) of the binder included in the cathode active material layer 12 may be, for example, in a range of about 1 wt% to about 10 wt% of the total weight of 100 wt% of the cathode active material layer 12. In some embodiments, the binder may not be provided.

### Cathode layer: Other additives

In addition to the above-described cathode active material, solid electrolyte, binder, and conductive material, in some embodiments, the cathode active material layer 12 may further include, for example, one or more additives such as a filler, a coating agent, a dispersant, and/or an ion-conductive adjuvant.

As a filler, a coating agent, a dispersant, an ion-conductive adjuvant, and/or the like that may be included in the cathode active material layer 12, suitable materials generally used in electrodes of an all-solid secondary battery may be used.

### Cathode layer: Cathode current collector]

The cathode current collector 11 may be provided as a plate, a foil, and/or the like including (e.g., consisting of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. A thickness of the cathode current collector 11 may be, for example, in a range of about 1 µm to about 100 µm, about 1 µm to about 50 µm, about 5 µm to about 25 µm, or about 10 µm to about 20 µm.

In one or more embodiments, the cathode current collector 11 may include, for example, a base film and a metal layer arranged on a side (or surface) (e.g., one side (surface) or two opposite sides (or surfaces)) of the base film. The base film may include, for example, a polymer. The polymer may be, for example, a thermoplastic polymer. The polymer may include, for example, PET, PE, PP, PBT, PI, and/or a (e.g., any suitable) combination thereof. The base film may be, for example, an insulator. In one or more embodiments, the base film may include an insulating thermoplastic polymer, and thus, if (e.g., when) a short circuit occurs, the base film may soften or liquefy to interrupt the operation of a battery, thereby suppressing or reducing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum ( Al), germanium (Ge), or an alloy thereof. The metal layer may serve as an electrochemical fuse and may be cut if (e.g., when) an overcurrent occurs, thereby performing a short circuit prevention function. A thickness of the metal layer may be adjusted to adjust a limit current and a maximum current. The metal layer may be electrodeposited or deposited on the base film. As the thickness of the metal layer decreases, a limit current and/or a maximum current of the cathode current collector 11 may decrease, and thus the stability of a lithium battery during a short circuit may be improved. In one or more embodiments, a lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, in some embodiments, a metal chip may be added between the metal layer and the lead tab. The metal chip may be a flake including (e.g., consisting of) the same material as a metal of the metal layer. The metal chip may be, for example, a metal foil or a metal mesh. The metal chip may be, for example, an aluminum foil, a copper foil, or an SUS (stainless steel) foil. The metal chip may be arranged on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. In one or more embodiments, a thickness of the base film may be, for example, in a range of about 1 µm to µm 50 µm, about 1.5 µm to about 50 µm, about 1.5 µm to about 40 µm, or about 1 µm to about 30 µm. The base film may have a thickness in such a range, and thus a weight of an electrode assembly may be more effectively reduced. In one or more embodiments, a melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, in some embodiments, surface treatment such as corona treatment may be performed on the base film. In one or more embodiments, a thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such a range, and thus the stability of an electrode assembly may be secured while conductivity is maintained. In one or more embodiments, a thickness of the metal chip may be, for example, in a range of about 2 µm to about 10 µm, about 2 µm to about 7 µm, or about 4 µm to about 6 µm. The metal chip may have a thickness in such a range, and thus the metal layer and the lead tab may be more easily connected. The cathode current collector 11 may have such a structure, and thus a weight of the cathode layer 10 may be reduced, thereby improving the energy density of the cathode layer 10 and the all-solid secondary battery 1.

### Cathode layer: First inactive member

Referring to FIGS. 4 and 5 and 8 to 12, in one or more embodiments, the all-solid secondary battery 1 may further include a first inactive member 40 (40a and/or 40b) arranged on at least one of the other side (e.g., side facing away the anode active material layer 22) of the anode current collector 21 and the other surface (e.g., side facing away the cathode active material layer) of the cathode current collector 11.

The first inactive member 40 (40a or 40b) may be defined as for the above described first inactive member 40 (40a or 40b) of the anode layer 20.

### Cathode layer: Second inactive member

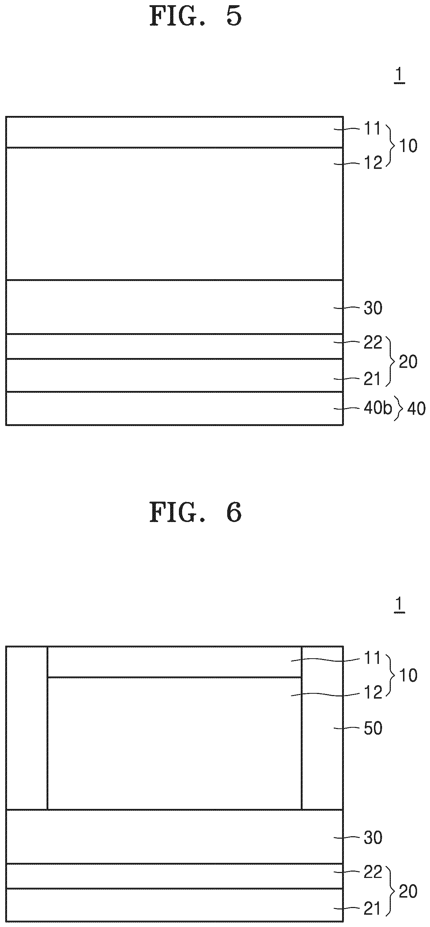

Referring to FIGS. 6 to 12, the cathode layer 10 may include the cathode current collector 11 and the cathode active material layer 12 arranged on one side (or surface) of the cathode current collector 11. A second inactive member 50 may be arranged on (e.g., abut) one side of the cathode layer 10.

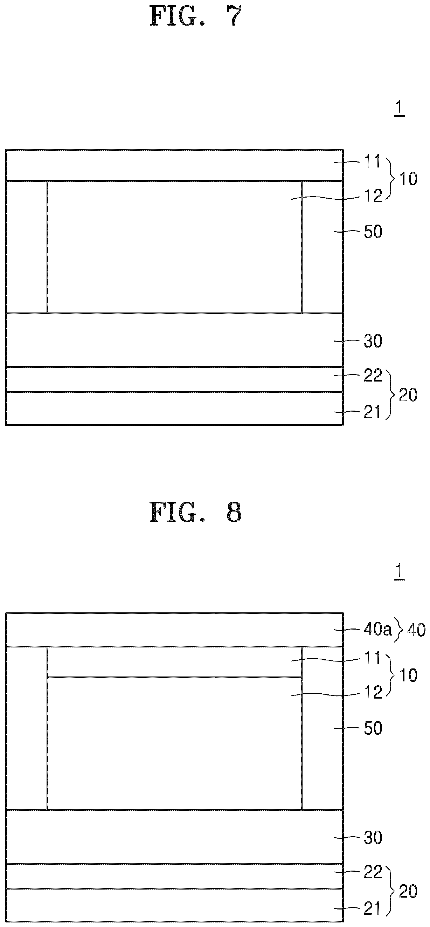

Referring to FIGS. 7, 9, and 11, in one or more embodiments, the second inactive member 50 may be arranged on (e.g., abutting) one side of the cathode active material layer 12 and may be arranged between the solid electrolyte layer 30 and the cathode current collector 11 opposite to the solid electrolyte layer 30. The second inactive member 50 may not arranged on (e.g., may not abut) one side of the cathode current collector 11. Referring to FIGS. 6, 8, 10, and 12, in one or more embodiments, the second inactive member 50 may be arranged on (e.g., abut) one side of each of the cathode active material layer 12 and the cathode current collector 11. The second inactive member 50 may be provided to prevent or reduce cracks of the solid electrolyte layer 30 during manufacturing and/or charging/discharging of the all-solid secondary battery 1, thereby improving the cycle characteristics of the all-solid secondary battery 1. In the all-solid secondary battery 1 that does not include the second inactive member 50, a non-uniform pressure may be applied to the solid electrolyte layer 30 in contact with the cathode layer 10 during manufacturing and/or charging/discharging of the all-solid secondary battery 1 to cause cracks in the solid electrolyte layer 30, and a lithium metal may be grown through the cracks to increase a possibility of the occurrence of a short circuit.

Referring to FIGS. 6 to 12, in the all-solid secondary battery 1, the second inactive member 50 may be, for example, thicker than the first anode active material layer 22. For example, the second inactive member 50 may be thicker than the solid electrolyte layer 30.

Referring to FIGS. 6 to 12, the second inactive member 50 may be around (e.g., surround) a side (e.g., side surface) of the cathode layer 10 and may be in contact with the solid electrolyte layer 30. The second inactive member 50 may be around (e.g., surround) the side (e.g., side surface) of the cathode layer 10 and may be in contact with the solid electrolyte layer 30, thereby effectively suppressing or reducing cracks of the solid electrolyte layer 30, which may be caused in a portion of the solid electrolyte layer 30, which is not in contact with the cathode layer 10, by a pressure difference during a pressing process. The second inactive member 50 may be around (e.g., surround) the side (e.g., side surface) of the cathode layer 10 and may be separated from the anode layer 20, for example, the first anode active material layer 22. The second inactive member 50 may be around (e.g., surround) the side (e.g., side surface) of the cathode layer 10, may be in contact with the solid electrolyte layer 30, and may be separated from the anode layer 20. In one or more embodiments, a possibility of a short circuit occurring due to physical contact between the cathode layer 10 and the first anode active material layer 22 or a possibility of a short circuit occurring due to the overcharging of lithium may be suppressed or reduced. In some embodiments, the second inactive member 50 may be arranged on both (e.g., simultaneously) of 1) one side (e.g., side surface) of the cathode active material layer 12 and 2) one side (e.g., side surface) of the cathode current collector 11, thereby more effectively suppressing or reducing a possibility of a short circuit due to contact between the cathode current collector 11 and the anode layer 20.

Referring to FIGS. 6 to 12, the second inactive member 50 may extend from one side of the cathode layer 10 to an end portion of the solid electrolyte layer 30. The second inactive member 50 may extend to the end portion of the solid electrolyte layer 30 so that cracks occurring at the end portion of the solid electrolyte layer 30 may be suppressed or reduced. The end portion of the solid electrolyte layer 30 may be an outermost portion in contact with a side (e.g., side surface) of the solid electrolyte layer 30. The second inactive member 50 may extend to the outermost portion in contact with the side (e.g., side surface) of the solid electrolyte layer 30. The second inactive member 50 may be separated from the anode layer 20, for example, the first anode active material layer 22. The second inactive member 50 may extend to the end portion of the solid electrolyte layer 30 but may not be in contact with the anode layer 20. For example, the second inactive member 50 may fill a space extending from one side of the cathode layer 10 to the end portion of the solid electrolyte layer 30.

In one or more embodiments, an area (e.g., a surface area of a surface facing the solid electrolyte layer 30) of the cathode active material layer 12 or the cathode layer 10 may be smaller than an area (e.g., a surface area of a surface facing the solid electrolyte layer 30) of the first anode active material layer 22 or the anode layer 20. The area of the cathode active material layer 12 or the cathode layer 10 may be smaller than an area (e.g., a surface area of a surface facing the cathode layer 10) of the solid electrolyte layer 30.

In one or more embodiments, the second inactive member 50 may be, for example, a gasket. By using the gasket as the second inactive member 50, cracks of the solid electrolyte layer 30 caused by a pressure difference during a pressing process may be effectively suppressed or reduced.

In one or more embodiments, the second inactive member 50 may have, for example, a single-layer structure. In one or more embodiments, the second inactive member 50 may have a multi-layer structure. The multi-layer structure may have, for example, a two-layer structure, a three-layer structure, or a four-layer structure, and the second inactive member 50 may have the multi-layer structure so that the physical properties of the second inactive member 50 may be more precisely adjusted.

In one or more embodiments, a portion or the entirety of the second inactive member 50 may be arranged to be spaced and/or apart (e.g., spaced apart or separated) from the side (e.g., side surface) of the cathode active material layer 12. The portion or the entirety of the second inactive member 50 may be arranged to be spaced and/or apart (e.g., spaced apart or separated) from the side (e.g., side surface) of the cathode active material layer 12 so that a manufacturing process of the all-solid secondary battery 1 may become easier, and a manufacturing speed of the all-solid secondary battery 1 may be increased. The portion or the entirety of the second inactive member 50 may be arranged to be spaced and/or apart (e.g., spaced apart or separated) from the side (e.g., side surface) of the cathode active material layer 12, and thus a change in volume of the cathode active material layer 12 in a side direction during charging or discharging may be more effectively accommodated, thereby further improving the lifespan characteristics of the all-solid secondary battery 1. Distances between the second inactive member 50 and the side (e.g., side surface) of the cathode active material layer 12 may each independently be, for example, in a range of about 0.1 µm to about 10 mm, about 1 µm to about 1 mm, about 1 µm to about 500 µm, about 1 µm to about 100 µm, about 1 µm to about 50 µm, or about 1 µm to about 10 µm.

Referring to FIGS. 1 to 12, the second inactive member 50 may be selected, for example, from materials used in the above-described first inactive member 40 (40a and/or 40b). The second inactive member 50 may not include (e.g., may exclude), for example, an electrode active material. In one or more embodiments, the second inactive member 50 may be, for example, a flame-retardant inactive member, an electronic insulating inactive member, an ionic insulating inactive member, or an elastic inactive member.

### Solid electrolyte layer

### Solid electrolyte layer: Solid electrolyte

Referring to FIGS. 1 to 12, the all-solid secondary battery 1 may include the solid electrolyte layer 30 between the cathode layer 10 and the anode layer 20. The solid electrolyte layer 30 may include, for example, a solid electrolyte and/or a (e.g., any suitable) combination of a solid electrolyte and a gel electrolyte.

The solid electrolyte may include, for example, a sulfide-based solid electrolyte, an oxide-based solid electrolyte, a polymer solid electrolyte, and/or a (e.g., any suitable) combination thereof.

In one or more embodiments, the solid electrolyte may be, for example, a sulfide-based solid electrolyte. The sulfide-based solid electrolyte may include, for example, at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z may be one selected from among Ge, Zn, and Ga, Li₂S-GeS₂, Li₂S-SiS₂-Li₃PO₄, Li₂S-SiS₂-LiₚMO_{q}, wherein p and q are each a positive number and M may be one selected from among P, Si, Ge, B, Al, Ga, and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. For example, the sulfide-based solid electrolyte may be prepared by treating a starting material such as Li₂S or P₂S₅ through melt quenching or mechanical milling. For example, after such treating, heat treatment may be performed. The solid electrolyte may be in an amorphous state, a crystalline state, or a mixture state thereof. In one or more embodiments, the solid electrolyte may be, for example, a material that includes at least sulfur (S), phosphorus (P), and lithium (Li) as constituent elements among the above-described materials of the sulfide-based solid electrolyte. For example, in some embodiments, the solid electrolyte may be a material including Li₂S-P₂S₅. If (e.g., when) a material including Li₂S-P₂S₅ is used as a sulfide-based solid electrolyte material for forming the solid electrolyte, a mixing molar ratio of Li₂S to P₂S₅, for example, Li₂S:P₂S₅, may be in a range of about 20:80 to about 90:10, about 25:75 to about 90:10, about 30:70 to about 70:30, or about 40:60 to about 60:40. In one or more embodiments, the sulfide-based solid electrolyte may include, for example, an argyrodite-type or kind solid electrolyte represented by Formula SE:

**Formula SE** **Li⁺₁₂₋ₙ₋ₓAⁿ⁺X²⁻₆₋ₓY⁻ₓ.**

In Formula SE, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. In one or more embodiments, the sulfide-based solid electrolyte may be, for example, an argyrodite-type or kind compound including at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. In some embodiments, the sulfide-based solid electrolyte may be, for example, an argyrodite-type or kind compound including at least one selected from among Li₆PS₅Cl, Li₆PS₅Br, and LisPSsl.

The argyrodite-type or kind solid electrolyte may have a density of about 1.5 g/cc to about 2.0 g/cc. The argyrodite-type or kind solid electrolyte may have a density of 1.5 g/cc or more so that the internal resistance of the all-solid secondary battery 1 may be reduced and Li may be effectively suppressed or reduced from penetrating the solid electrolyte layer 30.

The oxide-based solid electrolyte may include, for example, Li_{1+x+y}AlₓTi₂₋ₓSi_{y}P_{3-y}O₁₂, wherein 0<x<2 and 0≤y<3, BaTiO₃, Pb(Zr,Ti)O₃ (PZT), Pb₁₋ₓLaₓZr_{1-y}Ti_{y}O₃ (PLZT), wherein 0≤x<1 and 0≤y<1, Pb(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂, wherein M=Te, Nb, or Zr and 0≤x≤10, and/or a (e.g., any suitable) combination thereof. The oxide-based solid electrolyte may be prepared, for example, through sintering and/or the like.

In one or more embodiments, the oxide-based solid electrolyte may be, for example, a garnet-type or kind solid electrolyte selected from among Li₇La₃Zr₂O₁₂ (LLZO) and Li₃₊ₓLa₃Zr₂₋ₐMₐO₁₂ (LLZO doped with M), wherein M=Ga, W, Nb, Ta, or Al, 0<a<2, and 0≤x≤10.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C and a pressure of about 1 atm. The polymer solid electrolyte may not include (e.g., may exclude), for example, a liquid. In one or more embodiments, the polymer solid electrolyte may include a polymer, and the polymer may include, for example, polyethylene oxide (PEO), PVDF, vinylidene fluoride-hexafluoropropylene (PVDF-HFP), a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), PAN, polytetrafluoroelene (PTFE), polyethylenedioxythiophene (PEDOT), polypyrrole (PPY), polyaniline, poly acetylene, NAFION^{™}, AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), lithium 9,10-diphenylanthracene-2-sulfonate (DPASLi⁺), and/or a (e.g., any suitable) combination thereof, but embodiments of the present disclosure are not limited thereto. Any material may be used as long as the material may be used in a polymer electrolyte in the art. As the lithium salt, any material may be used as long as the material may be used as a lithium salt in the art. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number from 1 to 20, LiCl, Lil, and/or a (e.g., any suitable) mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

In one or more embodiments, the gel electrolyte may be, for example, a polymer gel electrolyte. In one or more embodiments, the gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. In some embodiments, the polymer gel electrolyte may have, for example, a gel state without including a liquid. The liquid electrolyte used in the polymer gel electrolyte may include, for example, a mixture of an ionic liquid, a lithium salt, and an organic solvent, a mixture of a lithium salt and an organic solvent, a mixture of an ionic liquid and an organic solvent, and/or a (e.g., any suitable) mixture of a lithium salt and an ionic liquid. The polymer used in the polymer gel electrolyte may be selected from among polymers used in a solid polymer electrolyte. The organic solvent may be selected from among organic solvents used in a liquid electrolyte. Non-limiting examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and/or a (e.g., any suitable) mixture thereof. The lithium salt may be selected from among lithium salts used in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, at least one selected from among compounds including a) one or more cations selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and/or a (e.g., any suitable) mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. In some embodiments, the polymer solid electrolyte may be impregnated, for example, in a liquid electrolyte in a secondary battery to form a polymer gel electrolyte. In some embodiments, the polymer gel electrolyte may further include inorganic particles. In one or more embodiments, the polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

### Solid electrolyte layer: Binder

In one or more embodiments, the solid electrolyte layer 30 may include, for example, a binder. The binder included in the solid electrolyte layer 30 may include, for example, SBR, PTFE, PVDF, PE, and/or the like, but embodiments of the present disclosure are not limited thereto. Any material may be used as long as the material may be used as a binder in the art. The binder of the electrolyte layer 30 may be the same as or different from the binder included in the cathode active material layer 12 and the first anode active material layer 22. In some embodiments, the binder may not be provided.

A content (e.g., amount) of the binder included in the solid electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to a total weight of 100 wt% of the solid electrolyte layer 30.

The present disclosure will be described in more detail through the following Examples and Comparative Examples. However, Examples are for illustrative purposes only, and the scope of the present disclosure is not limited by Examples.

### Preparation of sulfide-based composite cathode active material

### Preparation Example 1: Li₂S-LiI-CNF composite cathode active material

Li₂S and LiI were mixed at a weight ratio of 30:20. The obtained mixture was mechanically milled by using a ball mill to prepare a Li₂S-LiI composite. Milling conditions included a temperature of 25 °C, a speed of 510 rpm, and 10 hours.

The Li₂S-LiI composite and carbon nanofibers (CNFs) were mixed at a weight ratio of 50:10. The obtained mixture was mechanically milled by using a ball mill to prepare a Li₂S-LiI-CNF composite. Milling conditions included a temperature of 25 °C, a speed of 510 rpm, and 10 hours. The Li₂S-CNF-LiI composite was used as a composite cathode active material.

### Preparation Example 2: Li₂S-LiI-AlI₃-CNF composite

### First stage

LiI and AlI₃ were mixed at a molar ratio of 1:1 to prepare a first mixture.

Li₂S and the first mixture were mixed at a weight ratio of 40:20 to prepare a second mixture. The second mixture was mechanically milled by using a ball mill to prepare a Li₂S-LiI-AlI₃ composite. Milling conditions included a temperature of 25 °C, a speed of 600 rpm, and 10 hours. Milling energy applied to a sample during milling was 28 G.

### Second stage

The Li₂S-LiI-AlI₃ composite and CNFs were mixed at a weight ratio of 60:10 to prepare a third mixture. The third mixture was mechanically milled by using a ball mill to prepare a Li₂S-LiI-AlI₃-CNF composite. Milling conditions included a temperature of 25 °C, a speed of 600 rpm, and 10 hours. Milling energy applied to a sample during milling was 28 G. The Li₂S-LiI-AlI₃-CNF composite was used as a sulfide-based cathode active material.

Respective components of the Li₂S-LiI-AlI₃-CNF composite had a weight ratio of 40:15:5:10.

### Reference Preparation Example 1: Mixture of Li₂S, LiI, AlI₃, and CNFs

LiI and AlI₃ were mixed at a molar ratio of 1:1 to prepare a first mixture.

Li₂S and the first mixture were mixed at a weight ratio of 40:20, and a mixture of Li₂S, Lil, and AlI₃, and CNFs were additionally mixed at a weight ratio of 60:10 to be used as a sulfide-based cathode active material.

### Manufacturing of all-solid secondary battery

### Example 1: Elastic sheet (50 µm)/cathode layer (112 µm, NCA)/solid electrolyte layer (30 µm)/anode layer (37 µm, Si particles:CNT:binder=3:1:0.28):(Si-CNT:Ag-C=3:1 weight ratio)

### Preparation of cathode layer

LiNi_{0.8}Co_{0.15}Al_{0.05}O₂ (NCA) coated with Li₂O-ZrO₂ (LZO) was prepared as a cathode active material. The cathode active material coated with LZO was prepared according to a method disclosed in Korean Patent Publication No. 10-2016-0064942. Li₆PS₅Cl (D50=0.5 µm, crystalline), which was an argyrodite-type or kind crystal, was prepared as a solid electrolyte. A PTFE binder was prepared as a binder. CNFs were prepared as a conductive agent. A slurry, which was obtained by such materials were mixed with a xylene solvent such that a weight ratio of cathode active material:solid electrolyte:conductive agent binder were 84:11:3:2, was molded into the form of a sheet, and then the sheet was vacuum-dried at a temperature of 40 °C for 8 hours to prepare a cathode sheet. The prepared cathode sheet was arranged on a carbon layer of a cathode current collector consisting of aluminum foil, of which one side is coated with the carbon layer, and heated and roll-pressed at a temperature of 85 °C to prepare a cathode layer. The total thickness of the cathode layer was about 112 µm. A thickness of a cathode active material layer was about 92 µm, and a thickness of the carbon-coated aluminum foil was about 20 µm.

An initial charge capacity of the cathode layer was measured by using the above-described half-cell. An initial charge capacity of the cathode active material layer was 25 mAh.

### Preparation of anode layer

SUS (stainless steel) foil having a thickness of 10 µm was prepared as an anode current collector. Silicon (Si) particles with a primary particle diameter of 1 µm were prepared as a first anode active material. As a second anode active material, a 3:1 weight ratio mixture of CB particles with a primary particle diameter of about 30 nm and silver (Ag) particles with an average particle diameter of about 60 nm were prepared. CNTs were prepared as a fibrous carbon-based material. The CNTs included a carbon nanotube primary structure and a carbon nanotube secondary structure. The carbon nanotube primary structure consists of one carbon nanotube unit. A length of the carbon nanotube unit was in a range of 200 nm to 300 nm, and a diameter of the carbon nanotube unit was in a range of about 5 nm to about 10 nm. The carbon nanotube secondary structure was formed by aggregation of a plurality of carbon nanotube units. A length of the carbon nanotube secondary structure was about 5 µm, and a diameter thereof was about 40 nm.

3 g of a 3:1 weight ratio mixture of silicon (Si) particles and CNTs and 1 g of a 3:1 weight ratio mixture of carbon black (CB) and silver (Ag) were put into a container, and 4 g of an N-methyl-2-pyrrolidone (NMP) solution, which included 7 wt% of a PVDF binder (# 9300 manufactured by Kureha Chem. Ind.), was added thereto to prepare a mixed solution. While NMP was added little by little to the prepared mixed solution, the mixed solution was stirred to prepare a slurry. The prepared slurry was applied onto a SUS substrate/foil by using a bar coater, dried in air at a temperature of 80 °C for 10 minutes, and then vacuum-dried at a temperature of 40 °C for 10 hours to prepare a stack. The prepared stack was cold-roll-pressed to planarize a surface thereof, thereby preparing an anode layer having a first anode active material layer/anode current collector structure. A thickness of the first anode active material layer was about 27 µm.

An initial charge capacity of the anode layer was measured by using the above-described half-cell. An initial charge capacity of the first anode material layer was 9.0 mAh.

A ratio (B/A) of the initial charge capacity (B) of the first anode active material layer to the initial charge capacity (A) of the cathode active material layer was 0.36. The initial charge capacity of the cathode active material layer was determined by charging from a 1^{st} OCV up to a voltage of 4.25 V vs. Li/Li⁺. The initial charge capacity of the first anode active material layer was determined by charging from a 2^{nd} OCV up to a voltage of 0.01 V vs. Li/Li⁺.

In each of Examples 2 to 5 and Comparative Example 1, the ratio (B/A) of the initial charge capacity (B) of the first anode active material layer to the initial charge capacity (A) of the cathode active material layer measured under the same conditions as in Example 1 was in a range of 0.23 to 0.44.

### Preparation of solid electrolyte layer

A mixture was prepared by adding 1.5 parts by weight of an acrylic-based binder with respect to 98.5 parts by weight of a solid electrolyte to a Li₆PS₅Cl solid electrolyte (D50=3.0 µm, crystalline) which was an argyrodite-type or kind crystal. Octyl acetate was added to the prepared mixture and stirred to prepare a slurry. By using a bar coater, the prepared slurry was applied onto a nonwoven fabric placed on a PET substrate and dried in air at a temperature of 80 °C for 10 minutes to prepare a stack. The prepared stack was vacuum-dried at a temperature 80 °C for 2 hours to prepare a solid electrolyte layer.

### Inactive member: Elastic sheet

A porous polyurethane foam sheet with a thickness of 50 µm was prepared as an elastic sheet.

### Manufacturing of all-solid secondary battery

The solid electrolyte layer was arranged on the anode layer such that the first anode active material layer was in contact with the solid electrolyte layer, and the cathode layer was arranged on the solid electrolyte layer such that the cathode active material layer was in contact with the solid electrolyte layer, thereby preparing a stack.

The prepared stack was plate-pressed at a temperature of 85 °C and a pressure of 500 MPa for 30 minutes. Through such pressing, the solid electrolyte layer may be sintered to improve battery characteristics. A thickness of the sintered solid electrolyte layer was about 30 µm. A density of the Li₆PS₅Cl solid electrolyte, which was an argyrodite-type or kind crystal included in the sintered solid electrolyte layer, was 1.6 g/cc. An area of the solid electrolyte layer was equal to an area of the anode layer. The elastic sheet was additionally arranged on the cathode current collector of the pressed stack.

The stack further including an elastic sheet was put into in a pouch and vacuum-sealed to manufacture an all-solid secondary battery. Portions of the cathode current collector and the anode current collector were each extended to the outside of the sealed battery and used as a cathode terminal and an anode terminal, respectively.

### Example 2: Elastic sheet (50 µm)/cathode layer (112 µm, NCA)/solid electrolyte layer (30 µm)/anode layer (37 µm, Si particles:CNT:binder=3.2:0.8:0.28):(Si-CNT:Ag-C=3:1 weight ratio)

An all-solid secondary battery was manufactured in substantially the same manner as in Example 1, except that a composition ratio of an anode active material to a fibrous carbon-based material was changed to 3.2:0.8 (4:1).

### Example 3: Elastic sheet (50 µm)/cathode layer (112 µm, NCA)/solid electrolyte layer (30 µm)/anode layer (37 µm, Si particles:CNT:binder=3.5:0.5:0.28):(Si-CNT:Ag-C=3:1 weight ratio)

An all-solid secondary battery was manufactured in substantially the same manner as in Example 1, except that a composition ratio of an anode active material to a fibrous carbon-based material was changed to 3.5:0.5 (7:1).

### Example 4: Elastic sheet (50 µm)/cathode layer (112 µm, NCA)/solid electrolyte layer (30 µm)/anode layer (37 µm, Si particles:CNT:binder=3.6:0.4:0.28):(Si-CNT:Ag-C=3:1 weight ratio)

An all-solid secondary battery was manufactured in substantially the same manner as in Example 1, except that a composition ratio of an anode active material to a fibrous carbon-based material was changed to 3.6:0.4 (9:1).

### Example 5: Elastic sheet (50 µm)/cathode layer (112 µm, NCA)/solid electrolyte layer (30 µm)/anode layer (37 µm, Si particles:CNT:binder=2:2:0.28):(Si-CNT:Ag-C=3:1 weight ratio)

An all-solid secondary battery was manufactured in substantially the same manner as in Example 1, except that a composition ratio of an anode active material to a fibrous carbon-based material was changed to 2:2 (1:1).

### Example 6: Elastic sheet (50 µm)/cathode layer (112 µm, NCA)/solid electrolyte layer (30 µm)/anode layer (37 µm, Si particles:CNT:binder=3:1:0.28):(Si-CNT:Ag-supported with carbon=3:1 weight ratio)

An all-solid secondary battery was manufactured in substantially the same manner as in Example 1, except that, as a second anode active material, 1 g of CB on which silver particles were supported as described was used instead of 1 g of a 3:1 weight ratio mixture of CB and silver particles.

### Preparation of silver particle-supported CB

CB was dispersed in a 1.0 M sulfuric acid solution and stirred for 2 hours and then filtered and dried to prepare acid-treated CB.

10 g of the acid-treated CB was added to a mixed solvent of 1,500 g of distilled water, 1,500 g of ethanol, and 30 g of glycerol and stirred, and then 2 g of AgNOs was added and stirred to prepare a mixed solution. A particle diameter of the CB was 80 nm. A reducing agent was added to the mixed solution, and silver ions were reduced and supported on the CB. CB on which silver-containing particles were supported was filtered, cleaned, and dried to prepare a composite anode active material. As a result of scanning electron microscopy and X-ray photoelectron spectroscopy (XPS) measurement, it was confirmed that a plurality of silver-containing particles were supported on the CB particles. The silver-containing particles included silver particles, silver oxide (AgO) particles, and composite particles of silver (Ag) and silver oxide (AgO). A content (e.g., amount) of the silver-containing particles included in the composite anode active material (CB on which the silver-containing particles were supported) was 5 wt%. An average particle diameter of the silver particles was 10 nm.

### Comparative Example 1: Elastic sheet (50 µm)/cathode layer (112 µm, NCA)/solid electrolyte layer (30 µm)/anode layer (37 µm, Si particles:CNT:binder=3.6:0.4:0):(Si-CNT:Ag-C=4:0 weight ratio)

An all-solid secondary battery was manufactured in substantially the same manner as in Example 4, except that 4 g of a 3:1 weight ratio mixture of silicon (Si) particles and CNTs was used, a 3:1 weight ratio mixture of CB and silver (Ag) was not used, and a binder was not used.

### Reference Example 1: Elastic sheet (100 µm)/cathode layer (112 µm, NCA)/solid electrolyte layer (30 µm)/anode layer (17 µm, Ag-C+binder):(Si-CNT:Ag-C=0:4 weight ratio)

An all-solid secondary battery was manufactured in substantially the same manner as in Example 1, except that a 3:1 weight ratio mixture of silicon (Si) particles and CNTs was not used, 4 g of a 3:1 weight ratio mixture of CB and silver (Ag) was used, a thickness of an anode active material layer was changed to 7 µm, and a thickness of an elastic sheet was changed to 100 µm. A thickness of an anode layer is the total thickness of an anode current collector and an anode active material layer.

### Example 7: Cathode layer (113.8 µm, Li₂S-LiI-CNF)/solid electrolyte layer (30 µm)/anode layer (37 µm, Si particles:CNT:binder=3:1:0.28):(Si-CNT:Ag- C=3:1 weight ratio)

An all-solid secondary battery was manufactured in substantially the same manner as in Example 1, except that the following cathode layer including a sulfide-based cathode active material was used, and an elastic sheet was not used.

### Preparation of cathode layer

The Li₂S-LiI-CNF composite prepared in Preparation Example 1 was prepared as a cathode active material. Li₆PS₅Cl (D50=3.0 µm, crystalline), which was an argyrodite-type or kind crystal, was prepared as a solid electrolyte. PTFE was prepared as a binder. Such materials were mixed at a weight ratio of 60:40:1.2 of composite cathode active material:solid electrolyte: binder to prepare a cathode mixture. The cathode mixture was obtained through mixing using a ball mill.

The cathode mixture was arranged on one side of a cathode current collector consisting of aluminum foil, of which one surface was coated with carbon, and was plate-pressed at a pressure of 200 MPa for 10 minutes to prepare a cathode layer. The total thickness of the cathode layer was about 113.8 µm. A thickness of a cathode active material layer was about 93.8 µm, and a thickness of the carbon-coated aluminum foil was about 20 µm.

In Example 7, the ratio (B/A) of the initial charge capacity (B) of the first anode active material layer to the initial charge capacity (A) of the cathode active material layer was 0.35. The initial charge capacity of the cathode active material layer was determined by charging from a 1^{st} OCV up to a voltage of 2.8 V vs. Li/Li⁺. The initial charge capacity of the first anode active material layer was determined by charging from a 2^{nd} OCV up to a voltage of 0.01 V vs. Li/Li⁺.

### Comparative Example 2: Cathode layer (113.8 µm, Li₂S-LiI-CNF)/solid electrolyte layer (30 µm)/anode layer (37 µm, Si particles:CNT:binder=3.6:0.4:0):(Si-CNT:Ag-C=4:0 weight ratio)

An all-solid secondary battery was manufactured in substantially the same manner as in Example 4, except that the cathode layer of Example 7 was used, a 9:1 weight ratio mixture of silicon (Si) particles and CNTs was used, a 3:1 weight ratio mixture of CB and silver (Ag) was not used, a binder was not used, and an elastic sheet was not used.

### Reference Example 2: Elastic sheet (50 µm)/cathode layer (113.8 µm, Li₂S-LiI-CNF)/solid electrolyte layer (30 µm)/anode layer (17 µm, Ag-C+binder):(Si-CNT:Ag-C=0:4 weight ratio)

An all-solid secondary battery was manufactured in substantially the same manner as in Example 1, except that the cathode layer of Example 7 was used, a 3:1 weight ratio mixture of silicon (Si) particles and CNTs was not used, 4 g of a 3:1 weight ratio mixture of CB and silver (Ag) was used, and a thickness of an anode active material layer was changed to 7 µm. A thickness of an anode layer is the total thickness of an anode current collector and the anode active material layer.

### Example 8: Cathode layer (113.8 µm, Li₂S-LiI-AlI₃-CNF composite)/solid electrolyte layer (30 µm)/anode layer (37 µm, Si particles:CNT:binder=3:1:0.28):(Si-CNT:Ag-C=3:1 weight ratio)

An all-solid secondary battery was manufactured in substantially the same manner as in Example 7, except that, instead of a Li₂S-LiI-CNF composite, the Li₂S-LiI-AlI₃-CNF composite prepared in Preparation Example 2 was used as a cathode active material.

### Reference Example 3: Cathode layer (113.8 µm, Li₂S-LiI-AlI₃-CNF mixture)/solid electrolyte layer (30 µm)/anode layer (37 µm, Si particles:CNT:binder=3:1:0.28):(Si-CNT:Ag-C=3:1 weight ratio)

An all-solid secondary battery was manufactured in substantially the same manner as in Example 7, except that, instead of a Li₂S-LiI-CNF composite, the simple mixture of Li₂S, LiI, AlI₃, and CNFs prepared in Reference Preparation Example 1 was used as a cathode active material.

### Evaluation Example 1-1: Evaluation of change in volume during charging or discharging (NCA cathode active material)

After only a charging operation of a 1^{st} cycle in the following charge/discharge test of Evaluation Example 3 was performed on each of the all-solid secondary batteries manufactured in Example 1 and Reference Example 1, an SEM image of a cross section of each of the all-solid secondary batteries was measured to observe a change in thickness.

After charging of the 1^{st} cycle, a lithium metal layer was formed between the first anode active material layer and the anode current collector.

In the all-solid secondary battery of Example 1, a thickness of the lithium metal layer formed between the first anode active material layer and the anode current collector after initial charging was about 8 µm which was less than a thickness (34 µm) of the first anode active material layer after charging.

An increase in thickness of the all-solid secondary battery of Example 1 after the initial charging was 10% or less of an initial thickness of the all-solid secondary battery. Thus, a change in volume was suppressed or reduced during a charging or discharging process of the all-solid secondary battery of Example 1.

In the all-solid secondary battery of Example 1, an elastic member with a thickness of 50 µm was used to accommodate a change in volume during charging or discharging, one or more embodiments, the all-solid secondary battery included the elastic member with a thickness of 50 µm so that the energy density of the all-solid secondary battery was partially reduced.

In the all-solid secondary battery of Reference Example 1, a thickness of the lithium metal layer formed between the first anode active material layer and the anode current collector after initial charging was about 30 µm which was greater than a thickness (7 µm) of the first anode active material layer after charging.

An increase in thickness of the all-solid secondary battery of Reference Example 1 after the initial charging was greater than 15% of an initial thickness of the all-solid secondary battery. As such, a change in volume was significant during a charging or discharging process of the all-solid secondary battery of Reference Example 1.

In the all-solid secondary battery of Reference Example 1, an elastic member with a thickness of 100 µm was used to accommodate a change in volume during charging or discharging. In one or more comparative embodiments, the all-solid secondary battery included the elastic member with a thickness of 100 µm, and thus the energy density of the all-solid secondary battery was further reduced.

### Evaluation Example 1-2: Evaluation of change in volume during charging or discharging (Li₂S-LiI-CNF cathode active material)

After only a charging operation of a 1^{st} cycle in the following charge/discharge test of Evaluation Example 3 was performed on each of the all-solid secondary batteries manufactured in Example 7 and Reference Example 2, an SEM image of a cross section of each of the all-solid secondary batteries was measured to observe a change in thickness.

After charging of the 1^{st} cycle, a lithium metal layer was formed between the first anode active material layer and the anode current collector.

In the all-solid secondary battery of Example 7, a thickness of the lithium metal layer formed between the first anode active material layer and the anode current collector after initial charging was about 8 µm which was less than a thickness (34 µm) of the first anode active material layer after charging.

An increase in thickness of the all-solid secondary battery of Example 7 after the initial charging was 5% or less of an initial thickness of the all-solid secondary battery. Thus, a change in volume was insignificant during a charging or discharging process of the all-solid secondary battery of Example 7.

In the all-solid secondary battery of Example 7, an elastic member for accommodating a change in volume during charging or discharging was not used. As such, the energy density of the all-solid secondary battery due to the elastic member was not decreased.

In the all-solid secondary battery of Reference Example 2, a thickness of the lithium metal layer formed between the first anode active material layer and the anode current collector after initial charging was about 30 µm which was greater than a thickness (7 µm) of the first anode active material layer.

An increase in thickness of the all-solid secondary battery of Reference Example 2 after the initial charging was greater than 10% of an initial thickness of the all-solid secondary battery. Thus, a change in volume was significant during a charging or discharging process of the all-solid secondary battery of Reference Example 2.

In the all-solid secondary battery of Reference Example 2, an elastic member with a thickness of 50 µm was used to accommodate an increased volume change during charging or discharging. In one or more comparative embodiments, the all-solid secondary battery included the elastic member with a thickness of 50 µm so that the energy density of the all-solid secondary battery was partially reduced.

### Evaluation Example 2: XRD analysis and SEM analysis

By using Cu Kα radiation, an X-ray diffraction (XRD) spectrum was measured on bare Li₂S used in Preparation Example 2, pulverized Li₂S, and the Li₂S-LiI-AlI₃-CNF composite prepared in Preparation Example 2. Measurement results are shown in Table 1. A Li₂S crystallite size and a lattice constant were derived from a first peak for a (111) crystal plane of Li₂S that appears in the XRD spectrum.

The pulverized Li₂S was prepared through milling under the same conditions except that a 40:20 weight ratio mixture of Li₂S and the first mixture (1:1 molar ratio mixture of LiI and AlI₃) in the first stage of Preparation Example 2 was changed to 50 parts by weight of Li₂S. A second stage was not performed.

By using a particle size analyzer (PSA) using a laser and an SEM, for the bare material Li₂S used in Preparation Example 2, the pulverized Li₂S, and the Li₂S-LiI-AlI₃-CNF composite prepared in Preparation Example 2, a particle size (that is, a D50 particle size) of a composite and a Li₂S particle size of the composite were measured. Measurement results are shown in Table 1.

**Table 1**

| | Li₂S crystallite size [nm] | Li₂S particle size [µm] |
|---|---|---|
| Bare Li₂S | 64.67 | 8 |
| Pulverized Li₂S | 15.42 | - |
| Preparation Example 2 (Li₂S-LiI-AlI₃-CNF composite) | Less than 10 | Less than 1 |

As shown in Table 1, the Li₂S particle size and the Li₂S crystallite size in the Li₂S-LiI-AlI₃-CNF composite of Preparation Example 2 were considerably reduced as compared with the bare Li₂S.

Although not shown in Table 1, a Li₂S lattice constant of the Li₂S-LiI-AlI₃-CNF composite of Preparation Example 2 was larger than that of bare Li₂S.

The increase in the Li₂S lattice constant of the Li₂S-LiI-AlI₃-CNF composite as compared with the lattice constant of the bare Li₂S was determined to be due to LiI and/or AlI₃ being dissolved in a Li₂S crystal. Thus, it was confirmed that Li₂S, Lil, and/or AlI₃ formed a solid solution in the Li₂S-LiI-AlI₃-CNF composite.

Although not shown in Table 1, the Li₂S-LiI-AlI₃-CNF composite prepared in Preparation Example 2 had a D50 particle diameter of 8 µm, a D10 particle diameter of more than 2.0 µm, and a D90 particle diameter of 25 µm.

### Evaluation Example 3: Charge/discharge test

The charge/discharge characteristics of each of the all-solid secondary batteries manufactured in Examples 1 to 6, Comparative Example 1, and Reference Example 1 were evaluated through the following charge/discharge test. The charge/discharge test was performed by put the all-solid secondary battery into a thermostatic bath at a temperature of 45 °C.

At a 1^{st} cycle, the all-solid secondary batteries were each charged at a constant current of 0.5 mA/cm² for 12.5 hours until a battery voltage reached 3.9 V to 4.25 V. Subsequently, the all-solid secondary batteries were each discharged at a constant current of 0.5 mA/cm² for 12.5 hours until the battery voltage reached 2.5 V.

The charge/discharge characteristics of the all-solid secondary batteries manufactured in Example 7, Example 8, Comparative Example 2, Reference Example 1, and Reference Example 2 were each evaluated through the following charge/discharge test. The charge/discharge test was performed by put the all-solid secondary battery into a thermostatic bath at a temperature of 45 °C.

At a 1^{st} cycle, the all-solid secondary batteries were each charged at a constant current of 0.1 C for 12.5 hours until a battery voltage reached 2.5 V to 2.8 V. Subsequently, the all-solid secondary batteries were each discharged at a constant current of 0.1 C for 12.5 hours until the battery voltage reached 0.3 V.

A discharge capacity of the 1^{st} cycle was taken as a standard capacity. From a 2^{nd} cycle, charging and discharging were performed up to certain cycles (e.g., 500^{th} cycle or more) under the same conditions as the 1^{st} cycle. Measurement results are shown in Table 2.

The number of cycles refers to the number of cycles required for discharge capacity to decrease to 80% of the standard capacity after the 2^{nd} cycle. It was regarded that, as the number of cycles was increased, lifespan characteristics were improved.

**Table 2**

| | Number of cycles [times] |
|---|---|
| Example 1: Elastic sheet (50 µm)/cathode layer (112 µm, NCA)/solid electrolyte layer (30 µm)/anode layer (37 µm, Si particles:CNT:binder=3:1:0.28):(Si-CNT:Aq-C=3:1 weight ratio) | 600 |
| Example 2: Elastic sheet (50 µm)/cathode layer (112 µm, NCA)/solid electrolyte layer (30 µm)/anode layer (37 µm, Si particles:CNT:binder=3.2:0.8:0.28):(Si-CNT:Aq-C=3:1 weight ratio) | 522 |
| Example 3: Elastic sheet (50 µm)/cathode layer (112 µm, NCA)/solid electrolyte layer (30 µm)/anode layer (37 µm, Si particles:CNT:binder=3.5:0.5:0.28):(Si-CNT:Ag-C=3:1 weight ratio) | 438 |
| Example 4: Elastic sheet (50 µm)/cathode layer (112 µm, NCA)/solid electrolyte layer (30 µm)/anode layer (37 µm, Si particles:CNT:binder=3.6:0.4:0.28):(Si-CNT:Aq-C=3:1 weight ratio) | 212 |
| Example 5: Elastic sheet (50 µm)/cathode layer (112 µm, NCA)/solid electrolyte layer (30 µm)/anode layer (37 µm, Si particles:CNT:binder=2:2:0.28):(Si-CNT:Aq-C=3:1 weight ratio) | 325 |
| Example 6: Elastic sheet (50 µm)/cathode layer (112 µm, NCA)/solid electrolyte layer (30 µm)/anode layer (37 µm, Si particles:CNT:binder=3:1:0.28):(Si-CNT:Ag-supported with carbon=3:1 weight ratio) | 678 |
| Comparative Example 1: Elastic sheet (50 µm)/cathode layer (112 µm, NCA)/solid electrolyte layer (30 µm)/anode layer (37 µm, Si particles:CNT:binder=3.6:0.4:0):(Si-CNT:Aq-C=4:0 weight ratio) | 5 |
| Reference Example 1: Elastic sheet (100 µm)/cathode layer (112 µm, NCA)/solid electrolyte layer (30 µm)/anode layer (17 µm, Ag-C+binder):(Si-CNT:Aq-C=0:4 weight ratio) | 400 |
| Example 7: Cathode layer (113.8 µm, Li₂S-LiI-CNF composite)/solid electrolyte layer (30 µm)/anode layer (37 µm, Si particles:CNT:binder=3:1:0.28):(Si-CNT:Aq- C=3:1 weight ratio) | 500 |
| Example 8: Cathode layer (113.8 µm, Li₂S-LiI-AlI₃-CNF composite)/solid electrolyte layer (30 µm)/anode layer (37 µm, Si particles:CNT:binder=3:1:0.28):(Si-CNT:Ag- C=3:1 weight ratio | 750 |
| Comparative Example 2: Cathode layer (113.8 µm, Li₂S-LiI-CNF)/solid electrolyte layer (30 µm)/anode layer (37 µm, Si particles:CNT:binder=3.6:0.4:0):(Si-CNT:Aq-C=4:0 weight ratio) | 4 |
| Reference Example 2: Elastic sheet (50 µm)/cathode layer (113.8 µm, Li₂S-LiI-CNF)/solid electrolyte layer (30 µm)/anode layer (17 µm, Ag-C+binder):(Si-CNT:Aq-C=0:4 weight ratio) | 300 |

As shown in Table 2, for each of the all-solid secondary batteries of Examples 1 to 5, during charging or discharging, a change in volume was suppressed or reduced, and an increase in internal resistance was suppressed or reduced so that the all-solid secondary batteries of Examples 1 to 5 each exhibited excellent or suitable lifespan characteristics.

The all-solid secondary batteries of Examples 1 to 6 each had improved lifespan characteristics as compared with the all-solid secondary battery of Comparative Example 1 which did not include a second anode active material and a binder.

In the all-solid secondary battery of Comparative Example 1, it was determined that the lifespan characteristics of the all-solid secondary battery were deteriorated due to disconnection of a conducting path due to electrode separation and/or separation of the anode active material and the fibrous carbon-based material during a charging or discharging process.

For each of the all-solid secondary batteries of Example 7 and Example 8, during charging or discharging, a change in volume was suppressed or reduced, and an increase in internal resistance was suppressed or reduced so that the all-solid secondary batteries of Example 7 and Example 8 each exhibited excellent or suitable lifespan characteristics.

Each of the all-solid secondary batteries of Example 7 and Example 8 had improved lifespan characteristics as compared with the all-solid secondary battery of Comparative Example 2 which did not include a second anode active material and a binder.

In the all-solid secondary battery of Comparative Example 2, it was determined that the lifespan of the all-solid secondary battery were deteriorated due to an increase in interfacial resistance between the first anode active material layer and the solid electrolyte or between the first anode active material layer and the anode current collector due to electrode separation during a charging or discharging process.

Although not shown in Table 2, the lifespan characteristics of the all-solid secondary battery of Reference Example 3 were deteriorated as compared with the all-solid secondary battery of Example 8.

### Evaluation Example 4: Evaluation of high-rate characteristics

The high-rate characteristics of each of the all-solid secondary batteries manufactured in Examples 1 to 6, Comparative Example 1, and Reference Example 1 were evaluated through the following charge/discharge test. The charge/discharge test was performed by put the all-solid secondary batteries into a thermostatic bath at a temperature of 45 °C.

The all-solid secondary batteries of Examples 1 to 6, Comparative Example 1, and Reference Example 1 were each charged at a constant current rate of 0.1 C at a temperature of 45 °C until a voltage reached 3.9 V (vs. Li), and then, in a constant voltage mode, while 3.9 V was maintained, the charging was cut off at a current rate of 0.05 C. Subsequently, the all-solid secondary batteries were each discharged at a constant current rate of 0.1 C until the voltage reached 2.5 V (vs. Li) during discharging (formation cycle).

The all-solid secondary batteries subjected to the formation cycle were each charged at a constant current rate of 0.2 C at a temperature of 45 °C until the voltage reached 3.9 V (vs. Li). Subsequently, the all-solid secondary batteries were each discharged at a constant current rate of 0.2 C until the voltage reached 2.5 V (vs. Li) during discharging (1^{st} cycle).

The all-solid secondary batteries subjected to the 1^{st} cycle were each charged at a constant current rate of 0.2 C at a temperature of 45 °C until the voltage reached 3.9 V (vs. Li). Subsequently, the all-solid secondary batteries were each discharged at a constant current rate of 0.33 C until the voltage reached 2.5 V (vs. Li) during discharging (2^{nd} cycle).

The all-solid secondary batteries subjected to the 2^{nd} cycle were each charged at a constant current rate of 0.2 C at a temperature of 45 °C until the voltage reached 3.9 V (vs. Li). Subsequently, the all-solid secondary batteries were each discharged at a constant current rate of 0.5 C until the voltage reached 2.5 V (vs. Li) during discharging (3^{rd} cycle).

The all-solid secondary batteries subjected to the 3^{rd} cycle were each charged at a constant current rate of 0.2 C at a temperature of 45 °C until the voltage reached 3.9 V (vs. Li). Subsequently, the all-solid secondary batteries were each discharged at a constant current rate of 1.0 C until the voltage reached 2.5 V (vs. Li) during discharging (4^{th} cycle).

The all-solid secondary battery was rested for 10 minutes after every charging/discharging cycle. Some of charge/discharge test results at a temperature of 45 °C are shown in Table 2. High-rate characteristics are defined by Equation 1.

The high-rate characteristics of each of the all-solid secondary batteries of Example 7, Comparative Example 2, and Reference Example 2 were evaluated through the following charge/discharge test. The charge/discharge test was performed by put the solid secondary batteries into a thermostatic bath at a temperature of 45 °C.

The all-solid secondary batteries of Example 7, Comparative Example 2, and Reference Example 2 were each charged at a constant current rate of 0.1 C at a temperature of 45 °C until a voltage reached 2.5 V (vs. Li), and then, in a constant voltage mode, while 2.5 V was maintained, the charging was cut off at a current rate of 0.05 C. Subsequently, the all-solid secondary batteries were each discharged at a constant current rate of 0.1 C until the voltage reached 0.3 V (vs. Li) during discharging (formation cycle).

The all-solid secondary batteries subjected to the formation cycle were each charged at a constant current rate of 0.2 C at a temperature of 45 °C until the voltage reached 2.5 V (vs. Li). Subsequently, the all-solid secondary batteries were each discharged at a constant current rate of 0.2 C until the voltage reached 0.3 V (vs. Li) during discharging (1^{st} cycle).

The all-solid secondary batteries subjected to the 1^{st} cycle were each charged at a constant current rate of 0.2 C at a temperature of 45 °C until the voltage reached 2.5 V (vs. Li). Subsequently, the all-solid secondary batteries were each discharged at a constant current rate of 0.33 C until the voltage reached 0.3 V (vs. Li) during discharging (2^{nd} cycle).

The all-solid secondary batteries subjected to the 2^{nd} cycle were each charged at a constant current rate of 0.2 C at a temperature of 45 °C until the voltage reached 2.5 V (vs. Li). Subsequently, the all-solid secondary batteries were each discharged at a constant current rate of 0.5 C until the voltage reached 0.3 V (vs. Li) during discharging (3^{rd} cycle).

The all-solid secondary batteries subjected to the 3^{rd} cycle were each charged at a constant current rate of 0.2 C at a temperature of 45 °C until the voltage reached 2.5 V (vs. Li). Subsequently, the all-solid secondary batteries were each discharged at a constant current rate of 1.0 C until the voltage reached 0.3 V (vs. Li) during discharging (4^{th} cycle).

The all-solid secondary battery was rested for 10 minutes after every charging/discharging cycle. Some of charge/discharge test results at a temperature of 45 °C are shown in Table 2. High-rate characteristics are defined by Equation 1. high-rate characteristics (%) = [discharge capacity at 4th cycle/discharge capacity at formation cycle] × 100

**Table 3**

| | |
|---|---|
| | High-rate characteristics (1C/0.1C) [%] |
| Example 1: Elastic sheet (50 µm)/cathode layer (112 µm, NCA)/solid electrolyte layer (30 µm)/anode layer (37 µm, Si particles:CNT:binder=3:1:0.28):(Si-CNT:Aq-C=3:1 weight ratio) | 92 |
| Example 2: Elastic sheet (50 µm)/cathode layer (112 µm, NCA)/solid electrolyte layer (30 µm)/anode layer (37 µm, Si particles:CNT:binder=3.2:0.8:0.28):(Si-CNT:Aq-C=3:1 weight ratio) | 91.2 |
| Example 3: Elastic sheet (50 µm)/cathode layer (112 µm, NCA)/solid electrolyte layer (30 µm)/anode layer (37 µm, Si particles:CNT:binder=3.5:0.5:0.28):(Si-CNT:Aq-C=3:1 weight ratio) | 90.5 |
| Example 4: Elastic sheet (50 µm)/cathode layer (112 µm, NCA)/solid electrolyte layer (30 µm)/anode layer (37 µm, Si particles:CNT:binder=3.6:0.4:0.28):(Si-CNT:Aq-C=3:1 weight ratio) | 86.5 |
| Example 5: Elastic sheet (50 µm)/cathode layer (112 µm, NCA)/solid electrolyte layer (30 µm)/anode layer (37 µm, Si particles:CNT:binder=2:2:0.28):(Si-CNT:Aq-C=3:1 weight ratio) | 88.9 |
| Example 6: Elastic sheet (50 µm)/cathode layer (112 µm, NCA)/solid electrolyte layer (30 µm)/anode layer (37 µm, Si particles:CNT:binder=3:1:0.28):(Si-CNT:Ag-supported with carbon=3:1 weight ratio) | 93 |
| Comparative Example 1: Elastic sheet (50 µm)/cathode layer (112 µm, NCA)/solid electrolyte layer (30 µm)/anode layer (37 µm, Si particles:CNT:binder=3.6:0.4:0):(Si-CNT:Aq-C=4:0 weight ratio) | 25 |
| Reference Example 1: Elastic sheet (100 µm)/cathode layer (112 µm, NCA)/solid electrolyte layer (30 µm)/anode layer (17 µm, Ag-C+binder):(Si-CNT:Aq-C=0:4 weight ratio) | 90 |
| Example 7: Cathode layer (113.8 µm, Li₂S-LiI-CNF)/solid electrolyte layer (30 µm)/anode layer (37 µm, Si particles:CNT:binder=3:1:0.28):(Si-CNT:Aq- C=3:1 weight ratio) | 85 |
| Comparative Example 2: Cathode layer (113.8 µm, Li₂S-LiI-CNF)/solid electrolyte layer (30 µm)/anode layer (37 µm, Si particles:CNT:binder=3.6:0.4:0):(Si-CNT:Aq-C=4:0 weight ratio) | 21 |
| Reference Example 2: Elastic sheet (50 µm)/cathode layer (113.8 µm, Li₂S-LiI-CNF)/solid electrolyte layer (30 µm)/anode layer (17 µm, Ag-C+binder):(Si-CNT:Ag-C=0:4 weight ratio) | 80 |

As shown in Table 3, each of the all-solid secondary batteries of Examples 1 to 6 had improved high-rate characteristics as compared with the all-solid secondary battery of Comparative Example 1.

In each of the all-solid secondary batteries of Examples 1 to 6, the first anode active material layer concurrently (e.g., simultaneously) included the first anode active material, the second anode active material, and the fibrous carbon-based material so that, despite a change in volume of the first anode active material layer during charging or discharging, an increase in internal resistance of the first anode active material layer was suppressed or reduced, and the uniformity of an electrode reaction was improved, thereby improving the high-rate characteristics as compared with the all-solid secondary battery of Comparative Example 1.

The all-solid secondary battery of Example 7 had improved high-rate characteristics as compared with the all-solid secondary battery of Comparative Example 2.

In the all-solid secondary battery of Example 7, the first anode active material layer concurrently (e.g., simultaneously) includes the first anode active material, the second anode active material, and the fibrous carbon-based material so that, despite a change in volume of the first anode active material layer during charging or discharging, an increase in internal resistance of the anode active material layer was suppressed or reduced, and the uniformity of an electrode reaction was improved, thereby improving the high-rate characteristics as compared with the all-solid secondary battery of Comparative Example 2.

According to one or more aspects of embodiments of the present disclosure, there may be provided an all-solid secondary battery in which a fibrous carbon-based material and a binder are included in an anode active material layer having an initial charge capacity lower than an initial charge capacity of a cathode active material layer, thereby improving cycle characteristics and suppressing or reducing a change in volume during charging or discharging.

In the context of the present disclosure and unless otherwise defined, the terms "use," "using," and "used" may be considered synonymous with the terms "utilize," "utilizing," and "utilized," respectively.

As utilized herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. An all-solid secondary battery (1), comprising:
a cathode layer (10);
an anode layer (20); and
a solid electrolyte layer (30) between the cathode layer (10) and the anode layer (20),
wherein the cathode layer (10) comprises a cathode current collector (11) and a cathode active material layer (12) on a side of the cathode current collector (11), and
the anode layer (20) comprises an anode current collector (21) and a first anode active material layer (22) on a side of the anode current collector (21),
wherein the first anode active material layer (22) comprises:
a first anode active material and a second anode active material, each of which is capable of forming an alloy or a compound with lithium; and
a fibrous carbon-based material,
a ratio (B/A) of an initial charge capacity (B) of the first anode active material layer (22) to an initial charge capacity (A) of the cathode active material layer (12) is in a range of about 0.01 to about 0.75,
the initial charge capacity of the cathode active material layer (12) is determined by charging from a 1^{st} open circuit voltage up to a maximum charging voltage vs. Li/Li⁺, and
the initial charge capacity of the first anode active material layer (22) is determined by charging from a 2^{nd} open circuit voltage up to a voltage of about 0.01 V vs. Li/Li⁺.

2. The all-solid secondary battery (1) as claimed in claim 1, wherein the first anode active material in a form of particles has a size of 2 µm or less, and an aspect ratio of 5 or less.

3. The all-solid secondary battery (1) as claimed in claim 1 or 2, wherein the first anode active material comprises a first metal-based anode active material, the first metal-based anode active material comprising silicon, gold, platinum, palladium, silver, aluminum, bismuth, tin, zinc, or a combination thereof.

4. The all-solid secondary battery (1) as claimed in any of the claims 1 to 3, wherein a size of the first anode active material is less than a length of the fibrous carbon-based material, and
a ratio of the size of the first anode active material or a size of the second anode active material to the length of the fibrous carbon-based material is in a range of about 1:10 to about 1:2,000.

5. The all-solid secondary battery (1) as claimed in any of the claims 1 to 4, wherein the fibrous carbon-based material is a conductive carbon-based material,
an aspect ratio of the fibrous carbon-based material is 10 or more, and
the fibrous carbon-based material comprises an amorphous fibrous carbon-based material, a crystalline fibrous carbon-based material, or a combination thereof.

6. The all-solid secondary battery (1) as claimed in any of the claims 1 to 5, wherein the fibrous carbon-based material comprises a fibrous carbon nanostructure, the fibrous carbon nanostructure comprising carbon nanotubes, carbon nanofibers, carbon nanobelts, or a combination thereof.

7. The all-solid secondary battery (1) as claimed in any of the claims 1 to 6, wherein the carbon nanotubes comprise a carbon nanotube primary structure, a carbon nanotube secondary structure comprising a plurality of carbon nanotube primary particles, or a combination thereof,
the carbon nanotube primary structure being a single carbon nanotube unit.
wherein preferably the carbon nanotube primary structure comprises a single-walled carbon nanotube, a double-walled carbon nanotube, a multi-walled carbon nanotube, or a combination thereof, and has a diameter of about 1 nm to about 20 nm and a length of about 100 nm to about 2 µm, and
the carbon nanotube secondary structure comprises bundle-type carbon nanotubes, rope-type carbon nanotubes, or a combination thereof, and has a diameter of about 2 nm to about 50 nm and a length of about 500 nm to about 1,000 µm.

8. The all-solid secondary battery (1) as claimed in any of the claims 1 to 7, wherein the second anode active material in a form of particles has a size of less than 1 µm, and an aspect ratio of 5 or less, and comprises a carbon-based anode active material, a second metal-based anode active material distinguished from the first anode active material, or a combination thereof,
the carbon-based anode active material comprising amorphous carbon, crystalline carbon, porous carbon, or a combination thereof, and
the second metal anode active material comprises gold, platinum, palladium, silver, aluminum, bismuth, tin, zinc, or a combination thereof.
and/or
the second anode active material comprises a mixture of first particles consisting of amorphous carbon and second particles consisting of a second metal-based anode active material, and
wherein a content of the second particles is in a range of about 1 wt% to about 60 wt% with respect to a total weight of 100 wt% of the mixture.
And/or
the second anode active material comprises a composite anode active material, and
wherein the composite anode active material comprises:
a carbon-based support; and
a metal-based anode active material supported on the carbon-based support,
the metal-based anode active material comprising a metal, a metal oxide, a composite of a metal and a metal oxide, or a combination thereof, and being in a form of particles and having a particle diameter of about 1 nm to about 200 nm, and
the carbon-based support being in a form of particles and having a particle diameter of about 10 nm to about 2 µm.

9. The all-solid secondary battery (1) as claimed in any of the claims 1 to 8, wherein the first anode active material layer (22) comprises a binder,
the binder comprising a polymer binder and/or a fluorine-based binder, and
a content of the binder being in a range of about 0.1 parts by weight to about 20 parts by weight with respect to 100 parts by weight of a mixture of the first anode active material and the second anode active material.

10. The all-solid secondary battery (1) as claimed in any of the claims 1 to 9, wherein a thickness of the first anode active material layer (22) is 50% or less of a thickness of the cathode active material layer (12), and
the first anode active material layer (22) has a thickness of about 1 µm to about 50 µm.

11. The all-solid secondary battery (1) as claimed in any of the claims 1 to 10, further comprising a second anode active material layer between the anode current collector (21) and the first anode active material layer (22) and/or between the anode current collector (21) and the solid electrolyte layer (30),
wherein the second anode active material layer is a metal layer,
the metal layer comprises lithium or a lithium alloy, and
the second anode active material layer is thinner than the first anode active material layer (22).

12. The all-solid secondary battery (1) as claimed in any of the claims 1 to 11, wherein the cathode active material layer (12) comprises a cathode active material,
wherein the cathode active material comprises a sulfide-based cathode active material, an oxide-based cathode active material, or a combination thereof,
the sulfide-based cathode active material comprises nickel sulfide, copper sulfide, Li₂S, a Li₂S-containing composite, or a combination thereof,
the oxide-based cathode active material comprises a lithium transition metal oxide, a metal oxide, or a combination thereof,
the lithium transition metal oxide comprises a lithium cobalt oxide, a lithium nickel oxide, a lithium nickel cobalt oxide, a lithium nickel cobalt aluminum oxide, a lithium nickel cobalt manganese oxide, lithium manganate, lithium iron phosphate, or a combination thereof, and
the metal oxide comprises iron oxide, vanadium oxide, or a combination thereof, wherein preferably
the Li₂S-containing composite comprises a composite of Li₂S and a lithium salt, a composite of Li₂S, a lithium salt, and a conductive material, a composite of Li₂S and a metal halide, a composite of Li₂S, a metal halide, and a conductive material, a composite of Li₂S, a lithium salt, and a metal halide, a composite of Li₂S, a lithium salt, a metal halide, and a conductive material, or a combination thereof,
the composite of Li₂S and a lithium salt being represented by Li₂S-LiₐX1_{b}, wherein 1≤a≤5 and 1≤b≤5,
the composite of Li₂S, a lithium salt, a metal halide, and a conductive material being represented by Li₂S-LiₐX1_{b}-C, wherein 1≤a≤5 and 1≤b≤5,
the composite of Li₂S and a metal halide being represented by Li₂S-M_{c}X2_{d}, wherein 1≤c≤5 and 1≤d≤5,
the composite of Li₂S, a metal halide, and a conductive material being represented by Li₂S-M_{c}X2_{d}-C, wherein 1≤c≤5 and 1≤d≤5,
the composite of Li₂S, a lithium salt, and a metal halide being represented by Li₂S-LiₐX1_{b}-M_{c}X2_{d}, wherein 1≤a≤5, 1≤b≤5, 1≤c≤5, and 1≤d≤5,
the composite of Li₂S, a lithium salt, a metal halide, and a conductive material being represented by Li₂S-LiₐX1_{b}-M_{c}X2_{d}-C, wherein 1≤a≤5, 1≤b≤5, 1≤c≤5, 1≤d≤5,
X1 being I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCI, NCl₂, BN₂, or a combination thereof,
M being at least one metal selected from among Groups 2 to 15 of the periodic table of elements, and
X2 being I, Br, Cl, F, or a combination thereof.

13. The all-solid secondary battery (1) as claimed in any of the claims 1 to 12, wherein the cathode active material layer (12) further comprises at least one selected from among a solid electrolyte, a conductive material, and a binder,
the solid electrolyte comprising a sulfide-based solid electrolyte, and
the conductive material comprising a carbon-based conductive material, and
wherein the solid electrolyte layer (30) comprises a solid electrolyte or a combination of the solid electrolyte and a gel electrolyte,
the solid electrolyte comprising a sulfide-based solid electrolyte, an oxide-based solid electrolyte, a polymer solid electrolyte, or a combination thereof, and
the gel electrolyte comprising a polymer gel electrolyte.
whereby preferably the sulfide-based solid electrolyte comprises at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z is one selected from among Ge, Zn, and Ga, Li₂S-GeS₂, Li₂S-SiS₂-Li₃PO₄, Li₂S-SiS₂-LiₚMO_{q}, wherein p and q are each a positive number and M is one selected from among P, Si, Ge, B, Al, Ga, and In, Li₇₋ₓPS₆₋ₓClₓ, wherein 0<x<2, Li₇₋ₓPS₆₋ₓBrₓ, wherein 0<x<2, and Li₇₋ₓPS₆₋ₓIₓ, wherein 0≤x≤2, or comprises an argyrodite-type solid electrolyte comprising at least one selected from among Li₆PS₅Cl, Li₆PS₅Br, and Li₆PS₅I and having a density of about 1.5 g/cc to about 2.0 g/cc.

14. The all-solid secondary battery (1) as claimed in any of the claims 1 to 13, wherein at least one of the cathode current collector (11) or the anode current collector (21) comprises a base film and a metal layer on a side of the base film,
wherein the base film comprises a polymer, the polymer comprising polyethylene terephthalate, polyethylene, polypropylene, polybutylene terephthalate, polyimide, or a combination thereof, and
the metal layer comprises indium, copper, magnesium, stainless steel, titanium, iron, cobalt, nickel, zinc, aluminum, germanium, lithium, or an alloy thereof.

15. The all-solid secondary battery (1) as claimed in any of the claims 1 to 14, further comprising a first inactive member on at least one of a side of the cathode current collector (11) facing away the cathode active material layer (12) or a side of the anode current collector (21) facing away the first anode active material layer (22),
wherein the first inactive member is an elastic member.
